(19)

Europäisches
Patentamt

European
Patent Office

Office européen
des brevets

(11)  **EP 3 633 990 B1**

(12)  **EUROPEAN PATENT SPECIFICATION**

(45) Date of publication and mention
of the grant of the patent:
**27.10.2021  Bulletin 2021/43**

(51) Int Cl.:
***H04N 19/19*** *(2014.01)*  ***H04N 19/567*** *(2014.01)*
***H04N 19/109*** *(2014.01)*  ***H04N 19/147*** *(2014.01)*
***H04N 19/174*** *(2014.01)*  ***H04N 19/176*** *(2014.01)*

(21) Application number: **19198496.2**

(22) Date of filing: **20.09.2019**

(54) **AN APPARATUS AND METHOD FOR USING A NEURAL NETWORK IN VIDEO CODING**

VORRICHTUNG UND VERFAHRENZUM BETRIEB EINES NEURONALEN NETZWERKS ZUR
VIDEO KODIERUNG

APPAREIL ET PROCÉDÉ POUR L'EXPLOITATION D'UN RÉSEAU NEURONAL DANS LE CODAGE
VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2018  FI 20185825**

(43) Date of publication of application:
**08.04.2020  Bulletin 2020/15**

(60) Divisional application:
**21197453.0**

(73) Proprietor: **Nokia Technologies Oy
02610 Espoo (FI)**

(72) Inventors:
• **HANNUKSELA, Miska
33610 Tampere (FI)**
• **CRICRI, Francesco
33100 Tampere (FI)**
• **AYTEKIN, Caglar
33580 Tampere (FI)**

(74) Representative: **Berggren Oy
P.O. Box 16
Eteläinen Rautatiekatu 10A
00101 Helsinki (FI)**

(56) References cited:
**CN-A- 108 184 129**

• **YAO J ET AL: "AHG9:Convolutional Neural
Network Filter for inter frame", 10. JVET
MEETING; 10-4-2018 - 20-4-2018; SAN DIEGO;
(THE JOINT VIDEO EXPLORATION TEAM OF
ISO/IEC JTC1/SC29/WG11 AND ITU-T SG.16 );
URL: HTTP://PHENIX.INT-EVRY.FR/JVET/,, no.
JVET-J0043-v2, 9 April 2018 (2018-04-09),
XP030151219,**
• **"Call for Evidence on Neural Network
Compression", 123. MPEG MEETING; 20180716 -
20180720; LJUBLJANA; (MOTION PICTURE
EXPERT GROUP OR ISO/IEC
JTC1/SC29/WG11), , no. n17757 30 July 2018
(2018-07-30), XP030190597, Retrieved from the
Internet:
URL:http://phenix.int-evry.fr/mpeg/doc_end
_user/documents/123_Ljubljana/wg11/w17757.
zip w17757-CfE-NNcompression.docx [retrieved
on 2018-07-30]**

**Description**

## TECHNICAL FIELD

The present invention relates to an apparatus, a method and a computer program for using a neural network in video coding.

## BACKGROUND

Neural networks (NN) are used more and more in various types of devices, from smartphones to self-driving cars. Many small devices are typically very constrained in terms of memory, bandwidth and computation capacity. On the other hand, many small devices are configured to run applications, which could benefit from running the application or part of it as NN-based algorithms.

Lately, neural networks have been used for compressing and de-compressing data, such as video/images. Reducing the distortion in video/image compression is often intended to increase human perceptual quality. However, there is a rising number of machines utilizing machine learning that analyze data and take decisions independently from humans. Such analysis include e.g. object detection, scene classification, semantic segmentation, video event detection, anomaly detection, and pedestrian tracking.

Thus, there may arise scenarios, where the video/image encoding could be tuned differently than from human perceptual quality point of view. For example, a decoded video/image bitstream resulting from the encoded video/image bitstream may be analyzed through computationally-heavy processes carried out by large and deep neural networks. As another example, an analysis of the decoded video/image bitstream may result into alerts about anomalies or the presence of certain objects or events in the video, and a human observer may want to observe the alerted portions of the decoded video/image.

Accordingly, there is a need for an arrangement where the video/image encoding process could be optimized using a different distortion metric.

"AHG9: Convolutional Neural Network Filter for inter frames" by J. Yao et al., JVET-J0043-v2, 9 April 2018, discloses a video coding method utilizing convolutional neural network filters (CNNF), besides for intra frames, but also for inter frames. A flag is encoded to indicate whether to use CNNFs or traditional filter for inter frames. A different set of parameters is trained for inter frames within the CNN.

CN108184129 discloses a video coding and decoding method and a neural network for image filtering. The loop filtering processing therein comprises obtaining a first filtering image block after deblocking effect processing or a second filtering image block after sample compensation processing; and obtaining a third filtering image block based on the first filtering image block and at least one first filtering neural network which is trained, or obtaining a fourth filtering image block based on the second filtering image block and at least one second filtering neural network which is trained.

## SUMMARY

Now in order to at least alleviate the above problems, an improved method for training and running a neural network is introduced herein. The invention is set out in the appended set of claims. The further examples called "embodiments" in the description are illustrative examples.

## BRIEF DESCRIPTION OF THE DRAWINGS

For better understanding of the present invention, reference will now be made by way of example to the accompanying drawings in which:

Figure 1 shows schematically an electronic device employing embodiments of the invention;
Figure 2 shows schematically a user equipment suitable for employing embodiments of the invention;
Figure 3 further shows schematically electronic devices employing embodiments of the invention connected using wireless and wired network connections;
Figure 4 shows schematically a block chart of an encoder on a general level;
Figure 5 shows a flow chart of a method for performing the rate-distortion optimization according to an embodiment of the invention;
Figure 6 shows a simplified example of a setup for implementing the embodiments of the invention;
Figures 7a - 7c show examples of target systems for implementing the embodiments of the invention;
Figures 8a and 8b illustrate the derivation of the neural net distortion according to some embodiments of the invention; and

Figures 9a and 9b show simplified examples of implementing scalable video coding according to the embodiments of the invention.

## DETAILED DESCRIPTON OF SOME EXAMPLE EMBODIMENTS

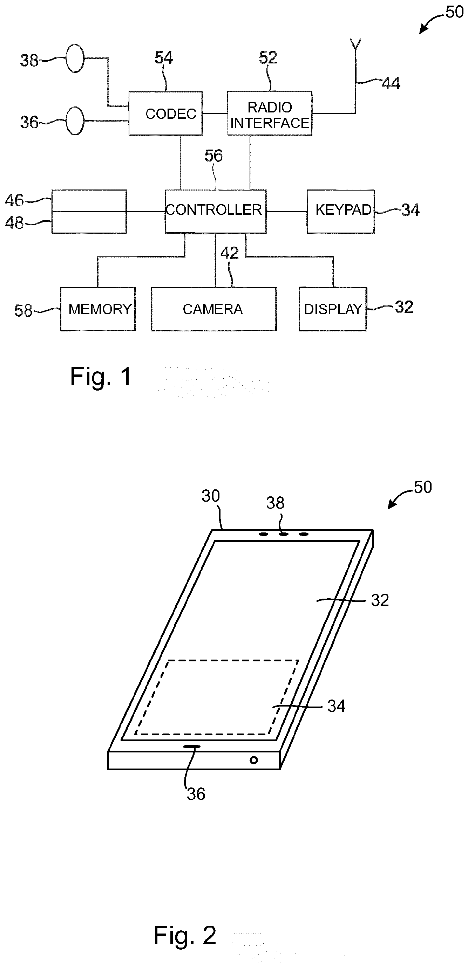

The following describes in further detail suitable apparatus and possible mechanisms for the video/image encoding process according to embodiments. In this regard reference is first made to Figures 1 and 2, where Figure 1 shows an example block diagram of an apparatus 50. The apparatus may be an Internet of Things (IoT) apparatus configured to perform various functions, such as for example, gathering information by one or more sensors, receiving or transmitting information, analyzing information gathered or received by the apparatus, or the like. The apparatus may comprise a video coding system, which may incorporate a codec. Figure 2 shows a layout of an apparatus according to an example embodiment. The elements of Figs. 1 and 2 will be explained next.

The electronic device 50 may for example be a mobile terminal or user equipment of a wireless communication system, a sensor device, a tag, or other lower power device. However, it would be appreciated that embodiments of the invention may be implemented within any electronic device or apparatus which may process data by neural networks.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery (or in other embodiments of the invention the device may be powered by any suitable mobile energy device such as solar cell, fuel cell or clockwork generator). The apparatus may further comprise a camera capable of recording or capturing images and/or video. The apparatus 50 may further comprise an infrared port for short range line of sight communication to other devices. In other embodiments the apparatus 50 may further comprise any suitable short range communication solution such as for example a Bluetooth wireless connection or a USB/firewire wired connection.

The apparatus 50 may comprise a controller 56, processor or processor circuitry for controlling the apparatus 50. The controller 56 may be connected to memory 58 which in embodiments of the invention may store both data in the form of image and audio data and/or may also store instructions for implementation on the controller 56. The controller 56 may further be connected to codec circuitry 54 suitable for carrying out coding and/or decoding of audio and/or video data or assisting in coding and/or decoding carried out by the controller.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and/or for receiving radio frequency signals from other apparatus(es).

The apparatus 50 may comprise a camera capable of recording or detecting individual frames which are then passed to the codec 54 or the controller for processing. The apparatus may receive the video image data for processing from another device prior to transmission and/or storage. The apparatus 50 may also receive either wirelessly or by a wired connection the image for coding/decoding. The structural elements of apparatus 50 described above represent examples of means for performing a corresponding function.

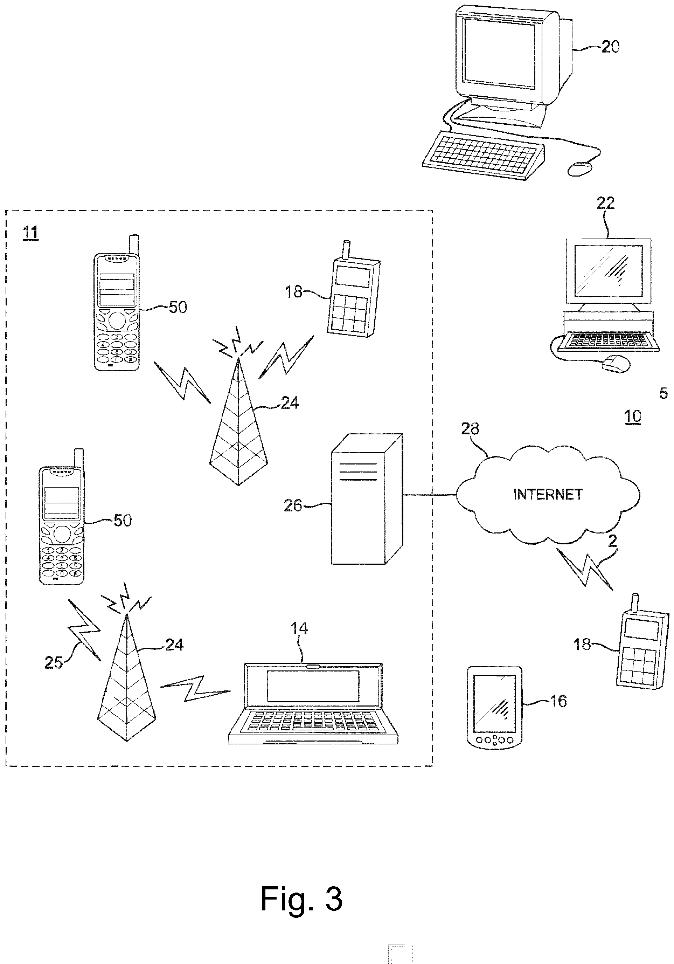

With respect to Figure 3, an example of a system within which embodiments of the present invention can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA, 4G, 5G network etc.), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices and/or apparatus 50 suitable for implementing embodiments of the invention.

For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

The embodiments may also be implemented in a set-top box; i.e. a digital TV receiver, which may/may not have a display or wireless capabilities, in tablets or (laptop) personal computers (PC), which have hardware and/or software to process neural network data, in various operating systems, and in chipsets, processors, DSPs and/or embedded systems offering hardware/software based coding.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11, 3GPP Narrowband IoT and any similar wireless communication technology. A communications device involved in implementing various embodiments of the present invention may communicate using various media including, but not limited to, radio, infrared, laser, cable connections, and any suitable connection.

In telecommunications and data networks, a channel may refer either to a physical channel or to a logical channel. A physical channel may refer to a physical transmission medium such as a wire, whereas a logical channel may refer to a logical connection over a multiplexed medium, capable of conveying several logical channels. A channel may be used for conveying an information signal, for example a bitstream, from one or several senders (or transmitters) to one or several receivers.

The embodiments may also be implemented in so-called IoT devices. The Internet of Things (IoT) may be defined, for example, as an interconnection of uniquely identifiable embedded computing devices within the existing Internet infrastructure. The convergence of various technologies has and will enable many fields of embedded systems, such as wireless sensor networks, control systems, home/building automation, etc. to be included the Internet of Things (IoT). In order to utilize Internet IoT devices are provided with an IP address as a unique identifier. IoT devices may be provided with a radio transmitter, such as WLAN or Bluetooth transmitter or a RFID tag. Alternatively, IoT devices may have access to an IP-based network via a wired network, such as an Ethernet-based network or a power-line connection (PLC).

An MPEG-2 transport stream (TS), specified in ISO/IEC 13818-1 or equivalently in ITU-T Recommendation H.222.0, is a format for carrying audio, video, and other media as well as program metadata or other metadata, in a multiplexed stream. A packet identifier (PID) is used to identify an elementary stream (a.k.a. packetized elementary stream) within the TS. Hence, a logical channel within an MPEG-2 TS may be considered to correspond to a specific PID value.

Available media file format standards include ISO base media file format (ISO/IEC 14496-12, which may be abbreviated ISOBMFF) and file format for NAL unit structured video (ISO/IEC 14496-15), which derives from the ISOBMFF.

Video codec consists of an encoder that transforms the input video into a compressed representation suited for storage/transmission and a decoder that can uncompress the compressed video representation back into a viewable form. A video encoder and/or a video decoder may also be separate from each other, i.e. need not form a codec. Typically encoder discards some information in the original video sequence in order to represent the video in a more compact form (that is, at lower bitrate).

Typical hybrid video encoders, for example many encoder implementations of ITU-T H.263 and H.264, encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate).

In temporal prediction, the sources of prediction are previously decoded pictures (a.k.a. reference pictures). In intra block copy (IBC; a.k.a. intra-block-copy prediction and current picture referencing), prediction is applied similarly to temporal prediction but the reference picture is the current picture and only previously decoded samples can be referred in the prediction process. Inter-layer or inter-view prediction may be applied similarly to temporal prediction, but the reference picture is a decoded picture from another scalable layer or from another view, respectively. In some cases, inter prediction may refer to temporal prediction only, while in other cases inter prediction may refer collectively to temporal prediction and any of intra block copy, inter-layer prediction, and inter-view prediction provided that they are performed with the same or similar process than temporal prediction. Inter prediction or temporal prediction may sometimes be referred to as motion compensation or motion-compensated prediction.

Inter prediction, which may also be referred to as temporal prediction, motion compensation, or motion-compensated prediction, reduces temporal redundancy. In inter prediction the sources of prediction are previously decoded pictures. Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

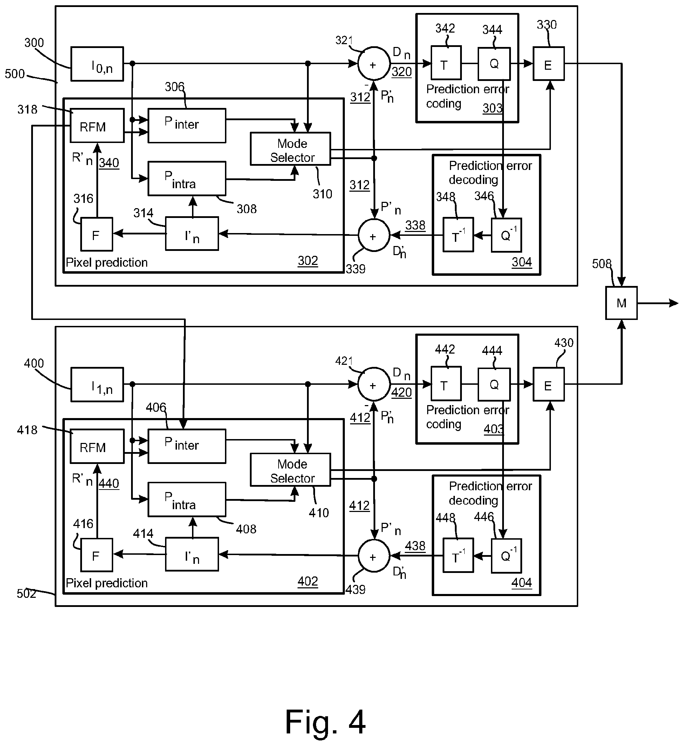

Figure 4 shows a block diagram of a general structure of a video encoder. Figure 4 presents an encoder for two layers, but it would be appreciated that presented encoder could be similarly extended to encode more than two layers. Figure 4 illustrates a video encoder comprising a first encoder section 500 for a base layer and a second encoder section 502 for an enhancement layer. Each of the first encoder section 500 and the second encoder section 502 may comprise similar elements for encoding incoming pictures. The encoder sections 500, 502 may comprise a pixel predictor 302, 402, prediction error encoder 303, 403 and prediction error decoder 304, 404. Figure 4 also shows an embodiment of the pixel predictor 302, 402 as comprising an inter-predictor 306, 406, an intra-predictor 308, 408, a mode selector 310, 410, a filter 316, 416, and a reference frame memory 318, 418. The pixel predictor 302 of the first encoder section 500 receives 300 base layer images of a video stream to be encoded at both the inter-predictor 306 (which determines the difference between the image and a motion compensated reference frame 318) and the intra-predictor 308 (which determines a prediction for an image block based only on the already processed parts of current frame or picture). The output of both the inter-predictor and the intra-predictor are passed to the mode selector 310. The intra-predictor 308 may have more than one intra-prediction modes. Hence, each mode may perform the intra-prediction and provide the predicted signal to the mode selector 310. The mode selector 310 also receives a copy of the base layer picture 300. Correspondingly, the pixel predictor 402 of the second encoder section 502 receives 400 enhancement layer images of a video stream to be encoded at both the inter-predictor 406 (which determines the difference between the image and a motion compensated reference frame 418) and the intra-predictor 408 (which determines a prediction for an image block based only on the already processed parts of current frame or picture). The output of both the inter-predictor and the intra-predictor are passed to the mode selector 410. The intra-predictor 408 may have more than one intra-prediction modes. Hence, each mode may perform the intra-prediction and provide the predicted signal to the mode selector 410. The mode selector 410 also receives a copy of the enhancement layer picture 400.

Depending on which encoding mode is selected to encode the current block, the output of the inter-predictor 306, 406 or the output of one of the optional intra-predictor modes or the output of a surface encoder within the mode selector is passed to the output of the mode selector 310, 410. The output of the mode selector is passed to a first summing device 321, 421. The first summing device may subtract the output of the pixel predictor 302, 402 from the base layer picture 300/enhancement layer picture 400 to produce a first prediction error signal 320, 420 which is input to the prediction error encoder 303, 403.

The pixel predictor 302, 402 further receives from a preliminary reconstructor 339, 439 the combination of the prediction representation of the image block 312, 412 and the output 338, 438 of the prediction error decoder 304, 404. The preliminary reconstructed image 314, 414 may be passed to the intra-predictor 308, 408 and to a filter 316, 416. The filter 316, 416 receiving the preliminary representation may filter the preliminary representation and output a final reconstructed image 340, 440 which may be saved in a reference frame memory 318, 418. The reference frame memory 318 may be connected to the inter-predictor 306 to be used as the reference image against which a future base layer picture 300 is compared in inter-prediction operations. Subject to the base layer being selected and indicated to be source for inter-layer sample prediction and/or inter-layer motion information prediction of the enhancement layer according to some embodiments, the reference frame memory 318 may also be connected to the inter-predictor 406 to be used as the reference image against which a future enhancement layer pictures 400 is compared in inter-prediction operations. Moreover, the reference frame memory 418 may be connected to the inter-predictor 406 to be used as the reference image against which a future enhancement layer picture 400 is compared in inter-prediction operations.

Filtering parameters from the filter 316 of the first encoder section 500 may be provided to the second encoder section 502 subject to the base layer being selected and indicated to be source for predicting the filtering parameters of the enhancement layer according to some embodiments.

The prediction error encoder 303, 403 comprises a transform unit 342, 442 and a quantizer 344, 444. The transform unit 342, 442 transforms the first prediction error signal 320, 420 to a transform domain. The transform is, for example, the DCT transform. The quantizer 344, 444 quantizes the transform domain signal, e.g. the DCT coefficients, to form quantized coefficients.

The prediction error decoder 304, 404 receives the output from the prediction error encoder 303, 403 and performs the opposite processes of the prediction error encoder 303, 403 to produce a decoded prediction error signal 338, 438 which, when combined with the prediction representation of the image block 312, 412 at the second summing device 339, 439, produces the preliminary reconstructed image 314, 414. The prediction error decoder may be considered to comprise a dequantizer 361, 461, which dequantizes the quantized coefficient values, e.g. DCT coefficients, to reconstruct the transform signal and an inverse transformation unit 363, 463, which performs the inverse transformation to the reconstructed transform signal wherein the output of the inverse transformation unit 363, 463 contains reconstructed block(s). The prediction error decoder may also comprise a block filter which may filter the reconstructed block(s) according to further decoded information and filter parameters.

The entropy encoder 330, 430 receives the output of the prediction error encoder 303, 403 and may perform a suitable entropy encoding/variable length encoding on the signal to provide error detection and correction capability. The outputs of the entropy encoders 330, 430 may be inserted into a bitstream e.g. by a multiplexer 508.

Entropy coding/decoding may be performed in many ways. For example, context-based coding/decoding may be applied, where in both the encoder and the decoder modify the context state of a coding parameter based on previously coded/decoded coding parameters. Context-based coding may for example be context adaptive binary arithmetic coding (CABAC) or context-based variable length coding (CAVLC) or any similar entropy coding. Entropy coding/decoding may alternatively or additionally be performed using a variable length coding scheme, such as Huffman coding/decoding or Exp-Golomb coding/decoding. Decoding of coding parameters from an entropy-coded bitstream or codewords may be referred to as parsing.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Later versions of H.265/HEVC included scalable, multiview, fidelity range extensions, , three-dimensional, and screen content coding extensions which may be abbreviated SHVC, MV-HEVC, REXT, 3D-HEVC, and SCC, respectively.

SHVC, MV-HEVC, and 3D-HEVC use a common basis specification, specified in Annex F of the version 2 of the HEVC standard. This common basis comprises for example high-level syntax and semantics e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

Some key definitions, bitstream and coding structures, and concepts of H.264/AVC and HEVC are described in this section as an example of a video encoder, decoder, encoding method, decoding method, and a bitstream structure, wherein the embodiments may be implemented. Some of the key definitions, bitstream and coding structures, and concepts of H.264/AVC are the same as in HEVC - hence, they are described below jointly. The aspects of the invention are not limited to H.264/AVC or HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

The elementary unit for the input to an H.264/AVC or HEVC encoder and the output of an H.264/AVC or HEVC decoder, respectively, is a picture. A picture given as an input to an encoder may also be referred to as a source picture, and a picture decoded by a decoded may be referred to as a decoded picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of H.264/AVC and/or HEVC. A component may be defined as an array or single sample from one of the three sample arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:

- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

In H.264/AVC and HEVC, it is possible to code sample arrays as separate color planes into the bitstream and respectively decode separately coded color planes from the bitstream. When separate color planes are in use, each one of them is separately processed (by the encoder and/or the decoder) as a picture with monochrome sampling.

A partitioning may be defined as a division of a set into subsets such that each element of the set is in exactly one of the subsets.

When describing the operation of HEVC encoding and/or decoding, the following terms may be used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples. A CU with the maximum allowed size may be named as LCU (largest coding unit) or coding tree unit (CTU) and the video picture is divided into non-overlapping LCUs.

A CU consists of one or more prediction units (PU) defining the prediction process for the samples within the CU and one or more transform units (TU) defining the prediction error coding process for the samples in the said CU. Typically, a CU consists of a square block of samples with a size selectable from a predefined set of possible CU sizes. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs).

Each TU can be associated with information describing the prediction error decoding process for the samples within the said TU (including e.g. DCT coefficient information). It is typically signalled at CU level whether prediction error coding is applied or not for each CU. In the case there is no prediction error residual associated with the CU, it can be considered there are no TUs for the said CU. The division of the image into CUs, and division of CUs into PUs and TUs is typically signalled in the bitstream allowing the decoder to reproduce the intended structure of these units.

In some coding systems, such as HEVC, a picture can be partitioned in tiles, which are rectangular and contain an integer number of blocks, such as LCUs in HEVC. In HEVC, the partitioning to tiles forms a regular grid that may be characterized by a list of tile column widths and a list of tile row heights. Tiles are ordered in the bitstream consecutively in the raster scan order of the tile grid. A tile may contain an integer number of slices, or a slice may contain an integer number of tiles. The blocks (such as CTUs in HEVC) may be scanned in encoding and decoding tile-wise in the raster scan order of blocks, and tiles may be scanned in raster scan order along the tile grid.

Video coding standards and specifications may allow encoders to divide a coded picture to coded slices or alike. In-picture prediction is typically disabled across slice boundaries. Thus, slices can be regarded as a way to split a coded picture to independently decodable pieces. Slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighbouring block may be regarded as unavailable for intra prediction, if the neighbouring block resides in a different slice.

In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

The filtering may for example include one more of the following: deblocking, sample adaptive offset (SAO), and/or adaptive loop filtering (ALF). H.264/AVC includes a deblocking, whereas HEVC includes both deblocking and SAO.

The deblocking loop filter may include multiple filtering modes or strengths, which may be adaptively selected based on the features of the blocks adjacent to the boundary, such as the quantization parameter value, and/or signaling included by the encoder in the bitstream. For example, the deblocking loop filter may comprise a normal filtering mode and a strong filtering mode, which may differ in terms of the number of filter taps (i.e. number of samples being filtered on both sides of the boundary) and/or the filter tap values. For example, filtering of two samples along both sides of the boundary may be performed with a filter having the impulse response of (3 7 9 -3)/16, when omitting the potential impact of a clipping operation.

An example of SAO is given next with reference to HEVC; however, SAO can be similarly applied to other coding schemes too. In SAO, a picture is divided into regions where a separate SAO decision is made for each region. In HEVC, the basic unit for adapting SAO parameters is CTU (therefore an SAO region is the block covered by the corresponding CTU).

In the SAO algorithm, samples in a CTU are classified according to a set of rules and each classified set of samples are enhanced by adding offset values. The offset values are signalled in the bitstream. There are two types of offsets: 1) Band offset 2) Edge offset. For a CTU, either no SAO or band offset or edge offset is employed. Choice of whether no SAO or band or edge offset to be used may be decided by the encoder with e.g. rate distortion optimization (RDO) and signaled to the decoder.

In the band offset, the whole range of sample values is in some embodiments divided into 32 equal-width bands. For example, for 8-bit samples, width of a band is 8 (=256/32). Out of 32 bands, 4 of them are selected and different offsets are signalled for each of the selected bands. The selection decision is made by the encoder and may be signalled as follows: The index of the first band is signalled and then it is inferred that the following four bands are the chosen ones. The band offset may be useful in correcting errors in smooth regions.

In the edge offset type, the edge offset (EO) type may be chosen out of four possible types (or edge classifications) where each type is associated with a direction: 1) vertical, 2) horizontal, 3) 135 degrees diagonal, and 4) 45 degrees diagonal. The choice of the direction is given by the encoder and signalled to the decoder. Each type defines the location of two neighbour samples for a given sample based on the angle. Then each sample in the CTU is classified into one of five categories based on comparison of the sample value against the values of the two neighbour samples. After each sample in an edge offset type CTU is classified as one of the five categories, an offset value for each of the first four categories is determined and signalled to the decoder. The offset for each category is added to the sample values associated with the corresponding category. Edge offsets may be effective in correcting ringing artifacts.

The adaptive loop filter (ALF) is another method to enhance quality of the reconstructed samples. This may be achieved by filtering the sample values in the loop. In some embodiments the encoder determines which region of the pictures are to be filtered and the filter coefficients based on e.g. RDO and this information is signalled to the decoder.

In typical video codecs the motion information is indicated with motion vectors associated with each motion compensated image block, such as a prediction unit. Each of these motion vectors represents the displacement of the image block in the picture to be coded (in the encoder side) or decoded (in the decoder side) and the prediction source block in one of the previously coded or decoded pictures. In order to represent motion vectors efficiently those are typically coded differentially with respect to block specific predicted motion vectors. In typical video codecs the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signalling the chosen candidate as the motion vector predictor. In addition to predicting the motion vector values, it can be predicted which reference picture(s) are used for motion-compensated prediction and this prediction information may be represented for example by a reference index of previously coded/decoded picture. The reference index is typically predicted from adjacent blocks and/or co-located blocks in temporal reference picture. Moreover, typical high efficiency video codecs employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signalled among a list of motion field candidate list filled with motion field information of available adjacent/co-located blocks.

In typical video codecs the prediction residual after motion compensation is first transformed with a transform kernel (like DCT) and then coded. The reason for this is that often there still exists some correlation among the residual and transform can in many cases help reduce this correlation and provide more efficient coding.

Video encoders may utilize Lagrangian cost functions to find optimal coding modes, e.g. the desired coding mode for a block and associated motion vectors. This kind of cost function uses a weighting factor λ to tie together the (exact or estimated) image distortion due to lossy coding methods and the (exact or estimated) amount of information that is required to represent the pixel values in an image area:

$$C = D + \lambda R, \qquad (1)$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Conventionally used distortion metrics may include but are not limited to peak signal-to-noise ratio (PSNR), mean squared error (MSE), sum of absolute differences (SAD), sub of absolute transformed differences (SATD), and structural similarity (SSIM), typically measured between the reconstructed video/image signal (that is or would be identical to the decoded video/image signal) and the "original" video/image signal provided as input for encoding.

Video coding standards and specifications may allow encoders to divide a coded picture to coded slices or alike. In-picture prediction is typically disabled across slice boundaries. Thus, slices can be regarded as a way to split a coded picture to independently decodable pieces. In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighboring CU may be regarded as unavailable for intra prediction, if the neighboring CU resides in a different slice.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A bytestream format has been specified in H.264/AVC and HEVC for transmission or storage environments that do not provide framing structures. The bytestream format separates NAL units from each other by attaching a start code in front of each NAL unit. To avoid false detection of NAL unit boundaries, encoders run a byte-oriented start code emulation prevention algorithm, which adds an emulation prevention byte to the NAL unit payload if a start code would have occurred otherwise. In order to enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. In H.264/AVC and HEVC, the NAL unit header indicates the type of the NAL unit

In HEVC, a two-byte NAL unit header is used for all specified NAL unit types. The NAL unit header contains one reserved bit, a six-bit NAL unit type indication, a three-bit nuh_temporal_id_plusl indication for temporal level (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. The abbreviation TID may be used to interchangeably with the TemporalId variable. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to tid_value does not use any picture having a TemporalId greater than tid_value as inter prediction reference. A sub-layer or a temporal sub-layer may be defined to be a temporal scalable layer (or a temporal layer, TL) of a temporal scalable bitstream, consisting of VCL NAL units with a particular value of the TemporalId variable and the associated non-VCL NAL units. A picture at temporal sub-layer with TemporalId equal to N may be predicted from reference pictures at temporal sub-layers with TemporalId less than or equal to N (unless further constrained by the picture type as explained below) and is disallowed or disabled to be predicted from reference pictures at temporal sub-layers with TemporalId greater than N. nuh_layer_id can be understood as a scalability layer identifier.

NAL units can be categorized into Video Coding Layer (VCL) NAL units and non-VCL NAL units. VCL NAL units are typically coded slice NAL units. In HEVC, VCL NAL units contain syntax elements representing one or more CU.

In HEVC, abbreviations for picture types may be defined as follows: trailing (TRAIL) picture, Temporal Sub-layer Access (TSA), Step-wise Temporal Sub-layer Access (STSA), Random Access Decodable Leading (RADL) picture, Random Access Skipped Leading (RASL) picture, Broken Link Access (BLA) picture, Instantaneous Decoding Refresh (IDR) picture, Clean Random Access (CRA) picture.

A Random Access Point (RAP) picture, which may also be referred to as an intra random access point (IRAP) picture in an independent layer contains only intra-coded slices. An IRAP picture belonging to a predicted layer may contain P, B, and I slices, cannot use inter prediction from other picturesin the same predicted layer, and may use inter-layer prediction from its direct reference layers. In the present version of HEVC, an IRAP picture may be a BLA picture, a CRA picture or an IDR picture. The first picture in a bitstream containing a base layer is an IRAP picture at the base layer. Provided the necessary parameter sets are available when they need to be activated, an IRAP picture at an independent layer and all subsequent non-RASL pictures at the independent layer in decoding order can be correctly decoded without performing the decoding process of any pictures that precede the IRAP picture in decoding order. The IRAP picture belonging to a predicted layer and all subsequent non-RASL pictures in decoding order within the same predicted layer can be correctly decoded without performing the decoding process of any pictures of the same predicted layer that precede the IRAP picture in decoding order, when the necessary parameter sets are available when they need to be activated and when the decoding of each direct reference layer of the predicted layer has been initialized . There may be pictures in a bitstream that contain only intra-coded slices that are not IRAP pictures.

In HEVC there are two picture types, the TSA and STSA picture types that can be used to indicate temporal sub-layer switching points. If temporal sub-layers with TemporalId up to N had been decoded until the TSA or STSA picture (exclusive) and the TSA or STSA picture has TemporalId equal to N+1, the TSA or STSA picture enables decoding of all subsequent pictures (in decoding order) having TemporalId equal to N+1. The TSA picture type may impose restrictions on the TSA picture itself and all pictures in the same sub-layer that follow the TSA picture in decoding order. None of these pictures is allowed to use inter prediction from any picture in the same sub-layer that precedes the TSA picture in decoding order. The TSA definition may further impose restrictions on the pictures in higher sub-layers that follow the TSA picture in decoding order. None of these pictures is allowed to refer a picture that precedes the TSA picture in decoding order if that picture belongs to the same or higher sub-layer as the TSA picture. TSA pictures have TemporalId greater than 0. The STSA is similar to the TSA picture but does not impose restrictions on the pictures in higher sub-layers that follow the STSA picture in decoding order and hence enable up-switching only onto the sub-layer where the STSA picture resides.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. In HEVC a sequence parameter set RBSP includes parameters that can be referred to by one or more picture parameter set RBSPs or one or more SEI NAL units containing a buffering period SEI message. A picture parameter set contains such parameters that are likely to be unchanged in several coded pictures. A picture parameter set RBSP may include parameters that can be referred to by the coded slice NAL units of one or more coded pictures.

In HEVC, a video parameter set (VPS) may be defined as a syntax structure containing syntax elements that apply to zero or more entire coded video sequences as determined by the content of a syntax element found in the SPS referred to by a syntax element found in the PPS referred to by a syntax element found in each slice segment header.

A video parameter set RBSP may include parameters that can be referred to by one or more sequence parameter set RBSPs.

The relationship and hierarchy between video parameter set (VPS), sequence parameter set (SPS), and picture parameter set (PPS) may be described as follows. VPS resides one level above SPS in the parameter set hierarchy and in the context of scalability and/or 3D video. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

VPS may provide information about the dependency relationships of the layers in a bitstream, as well as many other information that are applicable to all slices across all (scalability or view) layers in the entire coded video sequence. VPS may be considered to comprise two parts, the base VPS and a VPS extension, where the VPS extension may be optionally present.

Out-of-band transmission, signaling or storage can additionally or alternatively be used for other purposes than tolerance against transmission errors, such as ease of access or session negotiation. For example, a sample entry of a track in a file conforming to the ISO Base Media File Format may comprise parameter sets, while the coded data in the bitstream is stored elsewhere in the file or in another file. The phrase along the bitstream (e.g. indicating along the bitstream) or along a coded unit of a bitstream (e.g. indicating along a coded tile) may be used in claims and described embodiments to refer to out-of-band transmission, signaling, or storage in a manner that the out-of-band data is associated with the bitstream or the coded unit, respectively. The phrase decoding along the bitstream or along a coded unit of a bitstream or alike may refer to decoding the referred out-of-band data (which may be obtained from out-of-band transmission, signaling, or storage) that is associated with the bitstream or the coded unit, respectively. For example, the phrase along the bitstream may be used when the bitstream is contained in a file, such as a file conforming to the ISO Base Media File Format, and certain file metadata is stored in the file in a manner that associates the metadata to the bitstream, such as boxes in the sample entry for a track containing the bitstream, a sample group for the track containing the bitstream, or a timed metadata track associated with the track containing the bitstream.

A SEI NAL unit may contain one or more SEI messages, which are not required for the decoding of output pictures but may assist in related processes, such as picture output timing, rendering, error detection, error concealment, and resource reservation. Several SEI messages are specified in H.264/AVC and HEVC, and the user data SEI messages enable organizations and companies to specify SEI messages for their own use. H.264/AVC and HEVC contain the syntax and semantics for the specified SEI messages but no process for handling the messages in the recipient is defined. Consequently, encoders are required to follow the H.264/AVC standard or the HEVC standard when they create SEI messages, and decoders conforming to the H.264/AVC standard or the HEVC standard, respectively, are not required to process SEI messages for output order conformance. One of the reasons to include the syntax and semantics of SEI messages in H.264/AVC and HEVC is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

In HEVC, there are two types of SEI NAL units, namely the suffix SEI NAL unit and the prefix SEI NAL unit, having a different nal_unit_type value from each other. The SEI message(s) contained in a suffix SEI NAL unit are associated with the VCL NAL unit preceding, in decoding order, the suffix SEI NAL unit. The SEI message(s) contained in a prefix SEI NAL unit are associated with the VCL NAL unit following, in decoding order, the prefix SEI NAL unit.

A coded picture is a coded representation of a picture.

In HEVC, a coded picture may be defined as a coded representation of a picture containing all coding tree units of the picture. In HEVC, an access unit (AU) may be defined as a set of NAL units that are associated with each other according to a specified classification rule, are consecutive in decoding order, and contain at most one picture with any specific value of nuh_layer_id. In addition to containing the VCL NAL units of the coded picture, an access unit may also contain non-VCL NAL units. Said specified classification rule may for example associate pictures with the same output time or picture output count value into the same access unit.

A bitstream may be defined as a sequence of bits, in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. The end of the first bitstream may be indicated by a specific NAL unit, which may be referred to as the end of bitstream (EOB) NAL unit and which is the last NAL unit of the bitstream. In HEVC and its current draft extensions, the EOB NAL unit is required to have nuh_layer_id equal to 0.

In H.264/AVC, a coded video sequence is defined to be a sequence of consecutive access units in decoding order from an IDR access unit, inclusive, to the next IDR access unit, exclusive, or to the end of the bitstream, whichever appears earlier.

In HEVC, a coded video sequence (CVS) may be defined, for example, as a sequence of access units that consists, in decoding order, of an IRAP access unit with NoRaslOutputFlag equal to 1, followed by zero or more access units that are not IRAP access units with NoRaslOutputFlag equal to 1, including all subsequent access units up to but not including any subsequent access unit that is an IRAP access unit with NoRaslOutputFlag equal to 1. An IRAP access unit may be defined as an access unit in which the base layer picture is an IRAP picture. The value of NoRaslOutputFlag is equal to 1 for each IDR picture, each BLA picture, and each IRAP picture that is the first picture in that particular layer in the bitstream in decoding order, is the first IRAP picture that follows an end of sequence NAL unit having the same value of nuh_layer_id in decoding order. There may be means to provide the value of HandleCraAsBlaFlag to the decoder from an external entity, such as a player or a receiver, which may control the decoder. HandleCraAsBlaFlag may be set to 1 for example by a player that seeks to a new position in a bitstream or tunes into a broadcast and starts decoding and then starts decoding from a CRA picture. When HandleCraAsBlaFlag is equal to 1 for a CRA picture, the CRA picture is handled and decoded as if it were a BLA picture.

In HEVC, a coded video sequence may additionally or alternatively (to the specification above) be specified to end, when a specific NAL unit, which may be referred to as an end of sequence (EOS) NAL unit, appears in the bitstream and has nuh_layer_id equal to 0.

A group of pictures (GOP) and its characteristics may be defined as follows. A GOP can be decoded regardless of whether any previous pictures were decoded. An open GOP is such a group of pictures in which pictures preceding the initial intra picture in output order might not be correctly decodable when the decoding starts from the initial intra picture of the open GOP. In other words, pictures of an open GOP may refer (in inter prediction) to pictures belonging to a previous GOP. An HEVC decoder can recognize an intra picture starting an open GOP, because a specific NAL unit type, CRA NAL unit type, may be used for its coded slices. A closed GOP is such a group of pictures in which all pictures can be correctly decoded when the decoding starts from the initial intra picture of the closed GOP. In other words, no picture in a closed GOP refers to any pictures in previous GOPs. In H.264/AVC and HEVC, a closed GOP may start from an IDR picture. In HEVC a closed GOP may also start from a BLA_W_RADL or a BLA_N_LP picture. An open GOP coding structure is potentially more efficient in the compression compared to a closed GOP coding structure, due to a larger flexibility in selection of reference pictures.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

In many coding modes of H.264/AVC and HEVC, the reference picture for inter prediction is indicated with an index to a reference picture list. The index may be coded with variable length coding, which usually causes a smaller index to have a shorter value for the corresponding syntax element. In H.264/AVC and HEVC, two reference picture lists (reference picture list 0 and reference picture list 1) are generated for each bi-predictive (B) slice, and one reference picture list (reference picture list 0) is formed for each inter-coded (P) slice.

Many coding standards, including H.264/AVC and HEVC, may have decoding process to derive a reference picture index to a reference picture list, which may be used to indicate which one of the multiple reference pictures is used for inter prediction for a particular block. A reference picture index may be coded by an encoder into the bitstream is some inter coding modes or it may be derived (by an encoder and a decoder) for example using neighboring blocks in some other inter coding modes.

Several candidate motion vectors may be derived for a single prediction unit. For example, motion vector prediction HEVC includes two motion vector prediction schemes, namely the advanced motion vector prediction (AMVP) and the merge mode. In the AMVP or the merge mode, a list of motion vector candidates is derived for a PU. There are two kinds of candidates: spatial candidates and temporal candidates, where temporal candidates may also be referred to as TMVP candidates.

A candidate list derivation may be performed for example as follows, while it should be understood that other possibilities may exist for candidate list derivation. If the occupancy of the candidate list is not at maximum, the spatial candidates are included in the candidate list first if they are available and not already exist in the candidate list. After that, if occupancy of the candidate list is not yet at maximum, a temporal candidate is included in the candidate list. If the number of candidates still does not reach the maximum allowed number, the combined bi-predictive candidates (for B slices) and a zero motion vector are added in. After the candidate list has been constructed, the encoder decides the final motion information from candidates for example based on a rate-distortion optimization (RDO) decision and encodes the index of the selected candidate into the bitstream. Likewise, the decoder decodes the index of the selected candidate from the bitstream, constructs the candidate list, and uses the decoded index to select a motion vector predictor from the candidate list.

In HEVC, AMVP and the merge mode may be characterized as follows. In AMVP, the encoder indicates whether uni-prediction or bi-prediction is used and which reference pictures are used as well as encodes a motion vector difference. In the merge mode, only the chosen candidate from the candidate list is encoded into the bitstream indicating the current prediction unit has the same motion information as that of the indicated predictor. Thus, the merge mode creates regions composed of neighbouring prediction blocks sharing identical motion information, which is only signalled once for each region.

An example of the operation of advanced motion vector prediction is provided in the following, while other similar realizations of advanced motion vector prediction are also possible for example with different candidate position sets and candidate locations with candidate position sets. It also needs to be understood that other prediction mode, such as the merge mode, may operate similarly. Two spatial motion vector predictors (MVPs) may be derived and a temporal motion vector predictor (TMVP) may be derived. They may be selected among the positions: three spatial motion vector predictor candidate positions located above the current prediction block ($B_0$, $B_1$, $B_2$) and two on the left ($A_0$, $A_1$). The first motion vector predictor that is available (e.g. resides in the same slice, is inter-coded, etc.) in a pre-defined order of each candidate position set, ($B_0$, $B_1$, $B_2$) or ($A_0$, $A_1$), may be selected to represent that prediction direction (up or left) in the motion vector competition. A reference index for the temporal motion vector predictor may be indicated by the encoder in the slice header (e.g. as a collocated_ref_idx syntax element). The first motion vector predictor that is available (e.g. is inter-coded) in a pre-defined order of potential temporal candidate locations, e.g. in the order ($C_0$, $C_1$), may be selected as a source for a temporal motion vector predictor. The motion vector obtained from the first available candidate location in the co-located picture may be scaled according to the proportions of the picture order count differences of the reference picture of the temporal motion vector predictor, the co-located picture, and the current picture. Moreover, a redundancy check may be performed among the candidates to remove identical candidates, which can lead to the inclusion of a zero motion vector in the candidate list. The motion vector predictor may be indicated in the bitstream for example by indicating the direction of the spatial motion vector predictor (up or left) or the selection of the temporal motion vector predictor candidate. The co-located picture may also be referred to as the collocated picture, the source for motion vector prediction, or the source picture for motion vector prediction.

Motion parameter types or motion information may include but are not limited to one or more of the following types:

- an indication of a prediction type (e.g. intra prediction, uni-prediction, bi-prediction) and/or a number of reference pictures;
- an indication of a prediction direction, such as inter (a.k.a. temporal) prediction, inter-layer prediction, inter-view prediction, view synthesis prediction (VSP), and inter-component prediction (which may be indicated per reference picture and/or per prediction type and where in some embodiments inter-view and view-synthesis prediction may be jointly considered as one prediction direction) and/or
- an indication of a reference picture type, such as a short-term reference picture and/or a long-term reference picture and/or an inter-layer reference picture (which may be indicated e.g. per reference picture)

- a reference index to a reference picture list and/or any other identifier of a reference picture (which may be indicated e.g. per reference picture and the type of which may depend on the prediction direction and/or the reference picture type and which may be accompanied by other relevant pieces of information, such as the reference picture list or alike to which reference index applies);
- a horizontal motion vector component (which may be indicated e.g. per prediction block or per reference index or alike);
- a vertical motion vector component (which may be indicated e.g. per prediction block or per reference index or alike);
- one or more parameters, such as picture order count difference and/or a relative camera separation between the picture containing or associated with the motion parameters and its reference picture, which may be used for scaling of the horizontal motion vector component and/or the vertical motion vector component in one or more motion vector prediction processes (where said one or more parameters may be indicated e.g. per each reference picture or each reference index or alike);
- coordinates of a block to which the motion parameters and/or motion information applies, e.g. coordinates of the top-left sample of the block in luma sample units;
- extents (e.g. a width and a height) of a block to which the motion parameters and/or motion information applies.

In general, motion vector prediction mechanisms, such as those motion vector prediction mechanisms presented above as examples, may include prediction or inheritance of certain pre-defined or indicated motion parameters.

A motion field associated with a picture may be considered to comprise of a set of motion information produced for every coded block of the picture. A motion field may be accessible by coordinates of a block, for example. A motion field may be used for example in TMVP or any other motion prediction mechanism where a source or a reference for prediction other than the current (de)coded picture is used.

Different spatial granularity or units may be applied to represent and/or store a motion field. For example, a regular grid of spatial units may be used. For example, a picture may be divided into rectangular blocks of certain size (with the possible exception of blocks at the edges of the picture, such as on the right edge and the bottom edge). For example, the size of the spatial unit may be equal to the smallest size for which a distinct motion can be indicated by the encoder in the bitstream, such as a 4x4 block in luma sample units. For example, a so-called compressed motion field may be used, where the spatial unit may be equal to a pre-defined or indicated size, such as a 16x16 block in luma sample units, which size may be greater than the smallest size for indicating distinct motion. For example, an HEVC encoder and/or decoder may be implemented in a manner that a motion data storage reduction (MDSR) or motion field compression is performed for each decoded motion field (prior to using the motion field for any prediction between pictures). In an HEVC implementation, MDSR may reduce the granularity of motion data to 16x16 blocks in luma sample units by keeping the motion applicable to the top-left sample of the 16x16 block in the compressed motion field. The encoder may encode indication(s) related to the spatial unit of the compressed motion field as one or more syntax elements and/or syntax element values for example in a sequence-level syntax structure, such as a video parameter set or a sequence parameter set. In some (de)coding methods and/or devices, a motion field may be represented and/or stored according to the block partitioning of the motion prediction (e.g. according to prediction units of the HEVC standard). In some (de)coding methods and/or devices, a combination of a regular grid and block partitioning may be applied so that motion associated with partitions greater than a pre-defined or indicated spatial unit size is represented and/or stored associated with those partitions, whereas motion associated with partitions smaller than or unaligned with a predefined or indicated spatial unit size or grid is represented and/or stored for the pre-defined or indicated units.

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:

- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer. Quality scalability may be further categorized into fine-grain or fine-granularity scalability (FGS), medium-grain or medium-granularity scalability (MGS), and/or coarse-grain or coarse-granularity scalability (CGS), as described below.

- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.

- Bit-depth scalability: Base layer pictures are coded at lower bit-depth (e.g. 8 bits) than enhancement layer pictures (e.g. 10 or 12 bits).

- Dynamic range scalability: Scalable layers represent a different dynamic range and/or images obtained using a different tone mapping function and/or a different optical transfer function.

- Chroma format scalability: Base layer pictures provide lower spatial resolution in chroma sample arrays (e.g. coded in 4:2:0 chroma format) than enhancement layer pictures (e.g. 4:4:4 format).

- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.

- View scalability, which may also be referred to as multiview coding. The base layer represents a first view, whereas an enhancement layer represents a second view. A view may be defined as a sequence of pictures representing one camera or viewpoint. It may be considered that in stereoscopic or two-view video, one video sequence or view is presented for the left eye while a parallel view is presented for the right eye.

- Depth scalability, which may also be referred to as depth-enhanced coding. A layer or some layers of a bitstream may represent texture view(s), while other layer or layers may represent depth view(s).

- Region-of-interest scalability: an enhancement layer covers a spatial part (region of interest) of its reference layer.

- Interlaced-to-progressive scalability (also known as field-to-frame scalability): coded interlaced source content material of the base layer is enhanced with an enhancement layer to represent progressive source content. The coded interlaced source content in the base layer may comprise coded fields, coded frames representing field pairs, or a mixture of them. In the interlace-to-progressive scalability, the base-layer picture may be resampled so that it becomes a suitable reference picture for one or more enhancement-layer pictures.

- Hybrid codec scalability (also known as coding standard scalability): In hybrid codec scalability, the bitstream syntax, semantics and decoding process of the base layer and the enhancement layer are specified in different video coding standards. Thus, base layer pictures are coded according to a different coding standard or format than enhancement layer pictures. For example, the base layer may be coded with H.264/AVC and an enhancement layer may be coded with an HEVC multi-layer extension.

It should be understood that many of the scalability types may be combined and applied together. For example color gamut scalability and bit-depth scalability may be combined.

The term layer may be used in context of any type of scalability, including view scalability and depth enhancements. An enhancement layer may refer to any type of an enhancement, such as SNR, spatial, multiview, depth, bit-depth, chroma format, and/or color gamut enhancement. A base layer may refer to any type of a base video sequence, such as a base view, a base layer for SNR/spatial scalability, or a texture base view for depth-enhanced video coding.

Some scalable video coding schemes may require IRAP pictures to be aligned across layers in a manner that either all pictures in an access unit are IRAP pictures or no picture in an access unit is an IRAP picture. Other scalable video coding schemes, such as the multi-layer extensions of HEVC, may allow IRAP pictures that are not aligned, i.e. that one or more pictures in an access unit are IRAP pictures, while one or more other pictures in an access unit are not IRAP pictures. Scalable bitstreams with IRAP pictures or similar that are not aligned across layers may be used for example for providing more frequent IRAP pictures in the base layer, where they may have a smaller coded size due to e.g. a smaller spatial resolution. A process or mechanism for layer-wise start-up of the decoding may be included in a video decoding scheme. Decoders may hence start decoding of a bitstream when a base layer contains an IRAP picture and step-wise start decoding other layers when they contain IRAP pictures. In other words, in a layer-wise start-up of the decoding mechanism or process, decoders progressively increase the number of decoded layers (where layers may represent an enhancement in spatial resolution, quality level, views, additional components such as depth, or a combination) as subsequent pictures from additional enhancement layers are decoded in the decoding process. The progressive increase of the number of decoded layers may be perceived for example as a progressive improvement of picture quality (in case of quality and spatial scalability).

A sender, a gateway, a client, or another entity may select the transmitted layers and/or sub-layers of a scalable video bitstream. Terms layer extraction, extraction of layers, or layer down-switching may refer to transmitting fewer layers than what is available in the bitstream received by the sender, the gateway, the client, or another entity. Layer up-switching may refer to transmitting additional layer(s) compared to those transmitted prior to the layer up-switching by the sender, the gateway, the client, or another entity, i.e. restarting the transmission of one or more layers whose transmission was ceased earlier in layer down-switching. Similarly to layer down-switching and/or up-switching, the sender, the gateway, the client, or another entity may perform down- and/or up-switching of temporal sub-layers. The sender, the gateway, the client, or another entity may also perform both layer and sub-layer down-switching and/or up-switching. Layer and sub-layer down-switching and/or up-switching may be carried out in the same access unit or alike (i.e. virtually simultaneously) or may be carried out in different access units or alike (i.e. virtually at distinct times).

Scalability may be enabled in two basic ways. Either by introducing new coding modes for performing prediction of pixel values or syntax from lower layers of the scalable representation or by placing the lower layer pictures to a reference picture buffer (e.g. a decoded picture buffer, DPB) of the higher layer. The first approach may be more flexible and thus may provide better coding efficiency in most cases. However, the second, reference frame based scalability, approach may be implemented efficiently with minimal changes to single layer codecs while still achieving majority of the coding efficiency gains available. Essentially a reference frame based scalability codec may be implemented by utilizing the same hardware or software implementation for all the layers, just taking care of the DPB management by external means.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of an scalable codec or video coding standard amendment (e.g. SHVC, MV-HEVC, or 3D-HEVC) being used.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

Recently, the development of various artificial neural network (NN) techniques, especially the ones related to deep learning, has enabled to learn algorithms for several tasks from the raw data, which algorithms may outperform algorithms which have been developed for many years using traditional (non-learning based) methods.

Artificial neural networks, or simply neural networks, are parametric computation graphs consisting of units and connections between units. The units may be arranged in successive layers, and in some neural network architectures only units in adjacent layers are connected. Each connection has an associated parameter or weight, which defines the strength of the connection. The weight gets multiplied by the incoming signal in that connection, and the result of the multiplication represents the input to the subsequent unit. In fully-connected layers of a feedforward neural network, each unit in a layer is connected to each unit in the following layer. So, the signal which is output by a certain unit gets multiplied by the connections connecting that unit to other units in the following layer. Each of the latter units then may perform a simple operation such as a sum of the incoming signals.

Apart from fully-connected layers, there are different types of layers, such as but not limited to convolutional layers, non-linear activation layers, batch-normalization layers, and pooling layers.

The input layer receives the input data, such as images, and the output layer is task-specific and outputs an estimate of the desired data, for example a vector whose values represent a class distribution in the case of image classification. The "quality" of the neural network's output may be evaluated by comparing it to ground-truth output data. The comparison may include a loss or cost function, applied on the neural network's output and the ground-truth data. This comparison would then provide a "loss" or "cost" value.

The weights of the connections represent the biggest part of the learnable parameters of a neural network. Hereinafter, the terms "model" and "neural network" are used interchangeably, as well as the weights of neural networks are sometimes referred to as learnable parameters or simply as parameters.

The parameters are learned by means of a training algorithm, where the goal is to minimize the loss value on a training dataset and on a held-out validation dataset. In order to minimize such value, the network is run on a training dataset, a loss value is computed for the whole training dataset or for part of it, and the learnable parameters are modified in order to minimize the loss value on the training dataset. However, the performance of the training is evaluated on the held-out validation dataset. The training dataset is regarded as a representative sample of the whole data. One popular learning approach is based on iterative local methods, where the loss on the training dataset is minimized by following the negative gradient direction. Here, the gradient is understood to be the gradient of the loss with respect to the learnable parameters of the neural network. The loss may be represented by the reconstructed prediction error. Computing the gradient on the whole training dataset may be computationally too heavy, thus learning is performed in sub-steps, where at each step a mini-batch of data is sampled and gradients are computed from the mini-batch. This is referred to as stochastic gradient descent. The gradients are usually computed by back-propagation algorithm, where errors are propagated from the output layer to the input layer, by using the chain rule for differentiation. If the loss function or some operations performed by the neural network are not differentiable, it is still possible to estimate the gradient of the loss by using policy gradient methods, such as those used in reinforcement learning. The computed gradients are then used by one of the available optimization routines (such as stochastic gradient descent, Adam, RMSprop, etc.), to compute a weight update, which is then applied to update the weights of the network. After a full pass over the training dataset, the process is repeated several times until a convergence criterion is met, usually a generalization criterion. A generalization criterion may be derived from the loss value on the held-out validation dataset, for example the training may be stopped when the loss value on the held-out validation dataset is less than a certain threshold. The gradients of the loss, i.e., the gradients of the reconstructed prediction error with respect to the weights of the neural network, may be referred to as the training signal.

Training a neural network is an optimization process, but as a difference to a typical optimization where the only goal is to minimize a function, the goal of the optimization or training process in machine learning is to make the model to learn the properties of the data distribution. In other words, the goal is to learn to generalize to previously unseen data, i.e., data which was not used for training the model. This is usually referred to as generalization. In practice, data is usually split into two (or more) sets, the training set and the validation set. The training set is used for training the network, i.e., to modify its learnable parameters to minimize the loss. The validation set is used for checking the performance of the network on data which was not used to minimize the loss, as an indication of the final performance of the model. In particular, the errors on the training set and on the validation set are monitored during the training process to understand the following issues:

- If the network is learning at all - in this case, the training set error should decrease, otherwise we are in the regime of underfitting.
- If the network is learning to generalize - in this case, also the validation set error needs to decrease and to be not too much higher than the training set error. If the training set error is low, but the validation set error is much higher than the training set error, or it does not decrease, or it even increases, the model is in the regime of overfitting. This means that the model has just memorized the training set's properties and performs well only on that set, but performs poorly on a set not used for tuning its parameters.

Reducing the distortion in video/image compression is often intended to increase human perceptual quality. After all, we consider humans as the end users, i.e. in this case of human users watching the decoded image. Recently, with the advent of machine learning, especially deep learning, there is a rising number of machines (i.e., autonomous agents) that analyze data independently from humans and that may even take decisions based on the analysis results without human intervention. Examples of such analysis include but are not limited to object detection, scene classification, semantic segmentation, video event detection, anomaly detection, and pedestrian tracking.

Thus, there may arise scenarios, where the video/image encoding could be tuned differently, depending on the scenario:

- The decoded video/image bitstream is analyzed by machine(s). The analysis may comprise computationally-heavy processes such as larger and deeper neural networks. The task for the analysis can be but is not limited to any of those mentioned above.
- A human observer may want to watch selected parts of the video/image bitstream, e.g. on the basis of the analysis results. For example, the analysis may result into alerts about anomalies or the presence of certain objects or events in the video, and the human observer may want to observe the alerted portions of the decoded video/image.

Accordingly, the fact that the decoded data is sometimes primarily analyzed by machines, promotes the idea that the video/image encoding process could be optimized using a different distortion metric, i.e. other than conventionally used metrics aiming at minimizing the human-observed video/image quality degradation. However, since the coded video/image bitstream may also be watched by human observers, the decoded video/image quality should also be acceptable and represent the original video/image signal at a sufficient fidelity level, at least after a post-processing or refinement operation.

An enhanced method for improving the video/image bandwidth usage is introduced herein.

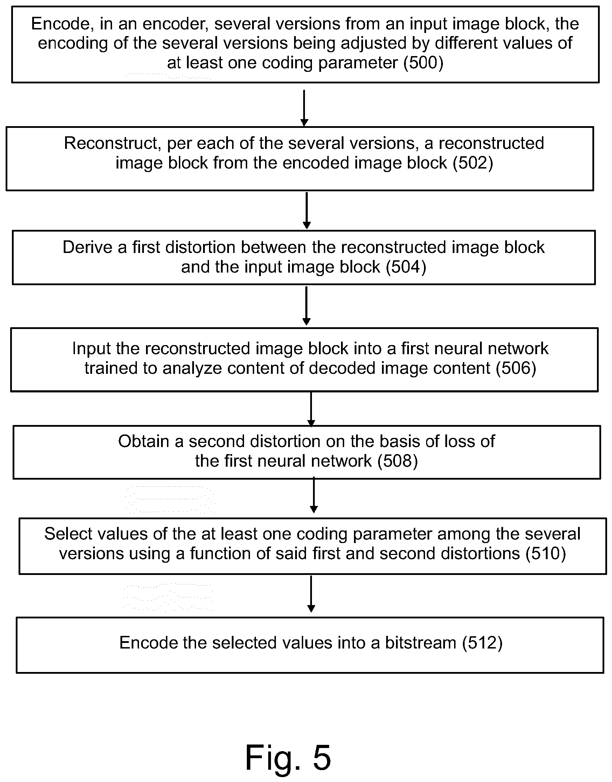

An example of a method, which is depicted in the flow chart of Figure 5, comprises encoding (500), in an encoder, several versions from an input image block, the encoding of the several versions being adjusted by different values of at least one coding parameter; reconstructing (502) per each of the several versions a reconstructed image block from the encoded image block; deriving (504) a first distortion between the reconstructed image block and the input image block; inputting (506) the reconstructed image block into a first neural network trained to analyze content of decoded image content; obtaining (508) a second distortion on the basis of loss of the first neural network; selecting (510) values of the at least one coding parameter among the several versions using a function of said first and second distortions; and encoding (512) the selected values into a bitstream.

An entire input image frame may be encoded block by block using the method depicted in Figure 5. Thus, the method is applicable to an image frame. An input image block may for example be but is not limited to a coding block similar to a coding block of HEVC. In general, an input image block may be any subset of an input image frame or an entire input image frame.

Thus, for an encoder that uses the Lagrangian function for rate-distortion optimization the method addresses the problem of performing the rate-distortion optimization for both humans and machines by minimizing also the distortion or error of the neural network.

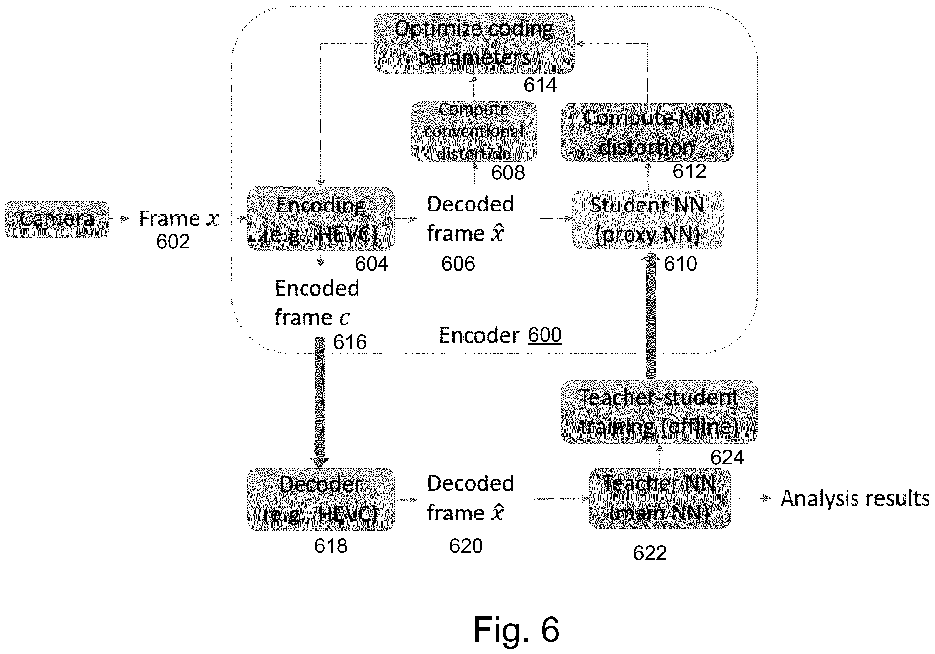

Figure 6 illustrates a simplified example of a setup for implementing the method and the embodiments related thereto. The encoder 600 receives an image frame 602 e.g. from a camera. The image frame is encoded using a suitable encoder 604, such as HEVC encoder. The encoded image frame, or at least a part of the encoded image frame, is reconstructed as a decoded image frame 606. The first distortion 608, which may also be referred to as human-perception distortion, is derived between the reconstructed part, such as the decoded image frame or a part of it, and the respective uncompressed part of the image frame. The reconstructed part is further input into the neural network 610, which has been trained to analyze the content of decoded image frames, such as to perform object detection, scene classification, semantic segmentation, video event detection, anomaly detection, or pedestrian tracking. The second distortion 612, which may be referred to as NN distortion, is obtained on the basis of loss of the neural network. The coding parameters of the encoder are then optimized 614 as a function of the first and second distortions. It needs to be understood that even though Figure 6 is described with reference to entire image frames, it can be similarly realized for operation based on partitions of image frames, such as image blocks (e.g. CU as specified in HEVC).

According to an embodiment, the coding parameters of said encoder are optimized by minimizing the function

$$J = w1 \times D1 + w2 \times D2 + \lambda \times R \qquad (2.)$$

where w1, w2 and λ are weights, D1 is the first distortion, D2 is the second distortion and R is a rate value.

Thus, D1 is a distortion suitable for optimizing human perception (e.g. in terms of PSNR, MSE, SAD, SATD, or SSIM), and D2 is a distortion or loss of the first neural network. R is a rate value (e.g. bitrate or bit count) indicating the number of bits needed to represent the required data to reconstruct the image block in the decoder.

The rate R may be the actual bitrate or bit count resulting from encoding. Alternatively, the rate R may be an estimated bitrate or bit count. One possible way of the estimating the rate R is to omit the final entropy encoding step and use e.g. a simpler entropy encoding or an entropy encoder where some of the context states have not been updated according to previously encoding mode selections.

According to an embodiment, the method further comprises inputting the at least one encoded image frame into a decoder; training a second neural network on the basis of at least one decoded image frame obtained from the decoder for analyzing content of decoded image frames; and training the first neural network to approximate the analysis output of the second neural network.

As shown in Figure 6, there may be a second neural network 622, which may be implemented in another device without any substantial memory, bandwidth, battery or computation limitations for carrying out heavy-computation neural network analysis. The second neural network may also be referred to as a main neural network or a teacher neural network. The first neural network 610, respectively, may be implemented in a small device constrained in terms of memory, bandwidth and/or computation capacity. The first neural network may also be referred to as a small neural network or a student neural network.

It is noted that the above limitations of device capabilities are described only to emphasize the advantages obtained by the embodiments in certain device setups. Nevertheless, the embodiments as described herein are equally applicable in devices having no such limitations.

Thus, the encoded image frame 616, which may be received from another device (e.g. encoder 600), is input into a respective decoder 618, such as a HEVC decoder. The decoded image frame 620 obtained from the decoder is then used for training the second neural network 622 for analyzing content of decoded image frames. The first, i.e. student neural network 610 is then trained 624 to approximate the analysis output of the second, i.e. teacher neural network 622.

According to an embodiment, the teacher-student training 624 is performed in an offline stage: training the student NN to replicate or approximate the output of the teacher NN may be performed e.g. at a server and the obtained student NN may be sent to the client implementing the encoder.

According to an embodiment, the trained student NN may be sent to the client device (e.g. encoder 600) in compressed form, using any suitable neural network compression algorithm. Therefore, at client's side, the received network may be decompressed. Signalling may be applied in order to signal to the client that the model has been compressed, wherein the signalling may include parameters related to the compression method, such as the parameters needed to de-compress the model.

It is noted that apart from teacher-student training, other suitable strategies for obtaining a smaller neural network which approximates the main neural network can be used, such as pruning strategies, where connections or layers are pruned, resulting into a model which may require less memory and/or less computations at inference time.

At run-time, i.e., when encoding a captured video sequence or image, the encoder encodes or estimates the encoding result of multiple options of coding parameter selections. Here, coding parameter selection may refer to either or both of selecting which coding parameters are encoded (e.g. which syntax elements of a bitstream format are encoded into a bitstream) and selecting value(s) for coding parameter(s) (e.g. which value for a syntax element of a bitstream format is encoded into a bitstream). The following pieces of information may be derived for each option:

- Rate: The encoder derives or estimates the bit count caused by the coding parameter selection.
- As part of the encoding, the encoder reconstructs the parts of video/image that the coding parameter selection affects. For example, the encoder may reconstruct a block of pixels that a prediction mode selection affects.

    ◦ Human-perception distortion: The encoder may derive a distortion between the reconstructed part and the respective uncompressed part provided as input for encoding. The distortion may for example be but is not limited to PSNR, MSE, SAD, SATD, or SSIM. Alternatively, the encoder may estimate a distortion caused by the coding parameter selection. For example, an encoder may derive a distortion based on a prediction block (resulting from a prediction mode selection) similarly as described above but by replacing a reconstructed block with a prediction block.
    ◦ NN distortion: The encoder inputs the reconstructed part to the student NN. The output of NNs may be a probability distribution over classes, such as in classification, in semantic segmentation, detection, etc. A distortion or error for the NN's output is obtained.

According to an embodiment, the NN distortion is used in a linear combination with conventional distortion (e.g.,

PSNR) in selecting the coding mode or alike among the options. The combined distortion may be used for Lagrangian rate-distortion optimization as described with the function (2.) above.

According to an embodiment, a subset or all options enabled by the coding system are considered. For example, a subset or all possible intra prediction modes may be considered. In other cases, options are considered in a particular order and no further options are considered when one or more stopping criteria are met. For example, if the value of J in the function (2.) is below a certain threshold or there is no further reduction of distortion in a hierarchically ordered motion estimation process, no further options need to be considered.

The various embodiments may be used in several types of systems. In the following, some examples of such systems are described using mainly the elements shown in Figure 6. However, it needs to be understood that applying the embodiments is not limited to the following types of systems.

Client-server system

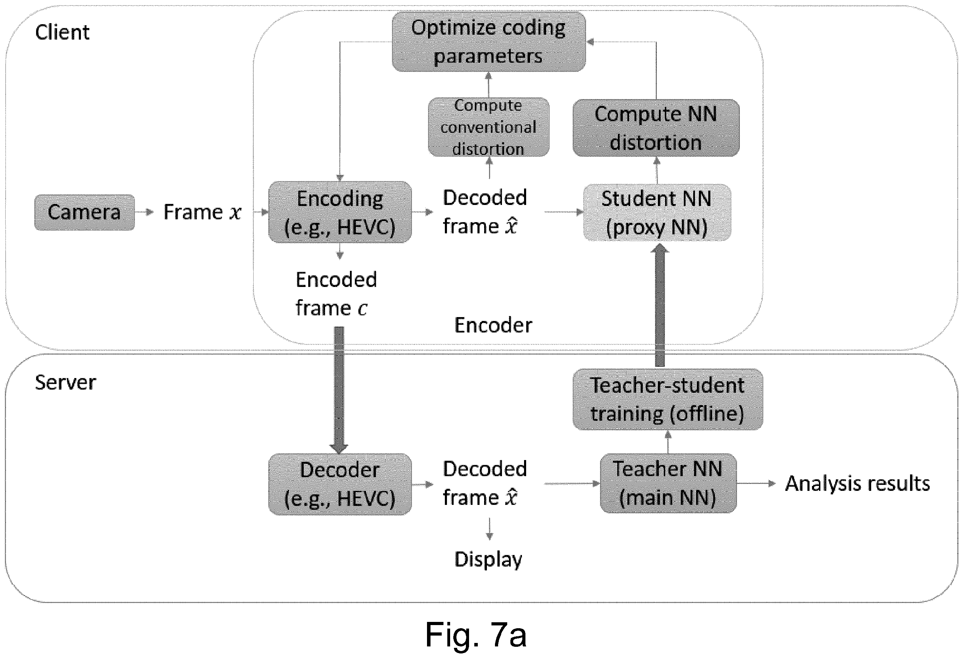

An example of the client-server system, as illustrated in Figure 7a, comprises at least two devices: a client, which may be a resource-limited device, and a server. The client transmits video/image bitstream(s) to the server over a communication channel. The system may for example be a remote monitoring system, where the client devices are surveillance cameras and the server contains or is operationally connected to a display, which can be used for viewing the camera feeds.

The client may be capable of capturing uncompressed data such as video frames. It may be capable of running a traditional encoder (e.g., HEVC encoder). However, if the client is a resource-limited device, it may be capable of running only small neural networks.

The server is capable of running more computationally-heavy processes, such as larger and deeper neural networks.

Non-real-time analysis in client device

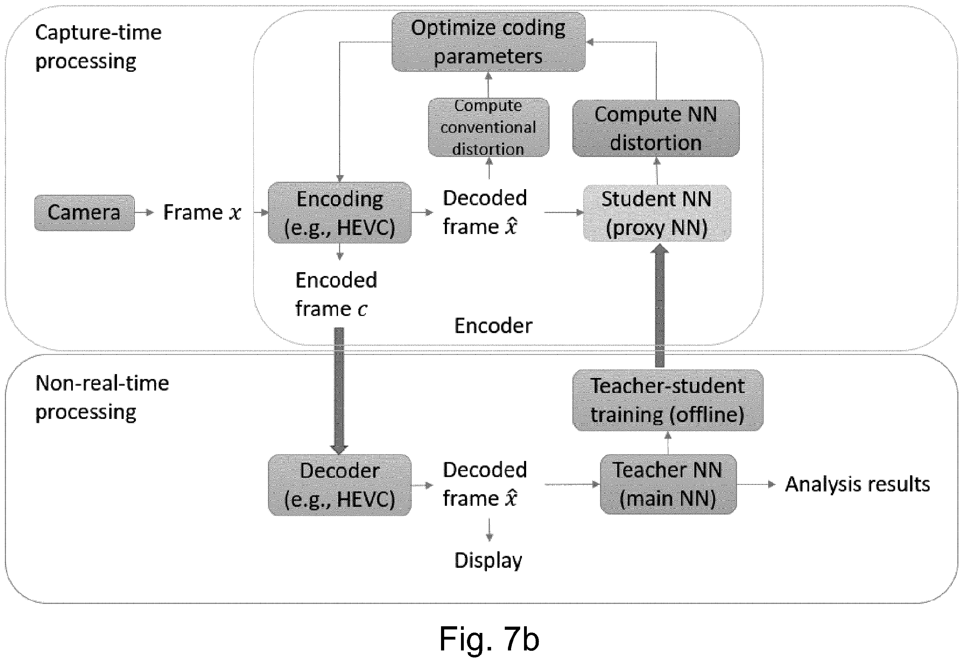

An example of the non-real-time analysis system in client device, as illustrated in Figure 7b, comprises one device, such as a smartphone. The video/image encoding is performed at capture time. Due to the processing speed requirements, the video/image encoding may only include running small neural networks. At a later time and/or at a pace that is slower than playback at a normal pace, the encoded video/image bitstream is analyzed using more computationally-heavy process(es), such as larger and deeper neural networks.

Power saving may be an additional or alternative reason for not executing the computationally-heavy process(es) at the capture time. The computationally-heavy processing may be performed at the time when the device is connected to a power supply, has a higher battery charging level, and/or is no longer used for video capturing (e.g. the camera application has been switched off).

Yet another reason may be the non-availability of sufficient memory at capture time, which is required by the heavy process(es) and which may become available at a later time, for example when other processes occupying memory have completed their execution.

The analysis may, for example, be used to create automated summaries of long recordings and/or a multitude of shots that are close to each other e.g. in time and/or in geographical location.

It is noted that even though Figure 7b illustrates displaying and inference using the teacher NN to be within the same non-real-time processing unit, they may often appear as distinct processes. Moreover, the displaying process typically happens in "real-time", i.e. at a normal picture rate.

Bandwidth optimization in remote analysis

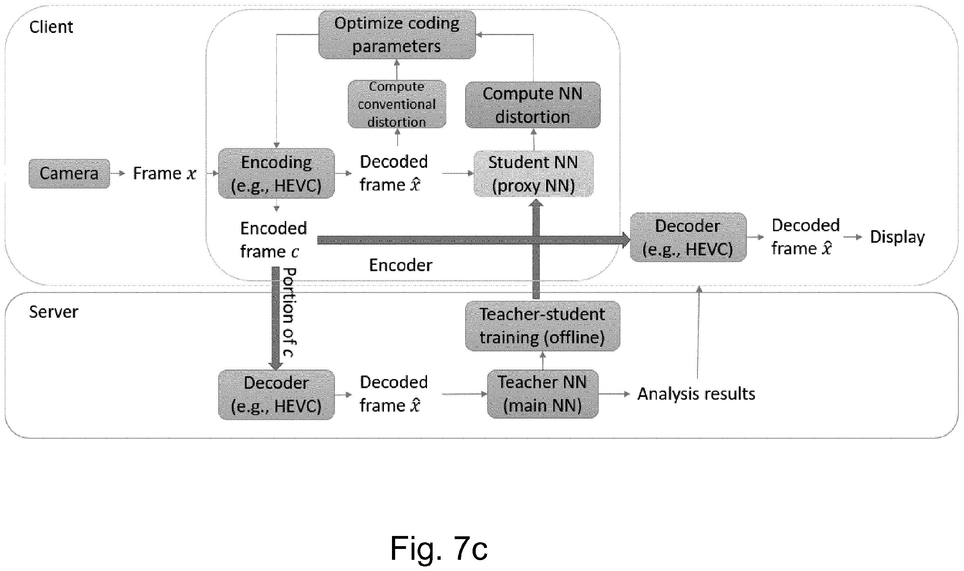

An example of the system for bandwidth optimization in remote analysis, as shown in Figure 7c, comprises at least two devices: a client, which be a resource-limited device, and a server. The client transmits video/image bitstream(s) to the server over a communication channel for analysis. The server sends the analysis results back to the client. The video/image may be further processed in the client device based on the analysis results and/or may be viewed on a display by a human observer e.g. using the client device.

In this usage scenario, the server does not need to receive a human-observable video/image bitstream. Advantageously, the encoding could be performed in a manner that a portion of the video/image bitstream suits the analysis process, while decoding the entire video/image bitstream is targeted for human-watching. Thus, the bitrate used for transmitting the video from the client to the server can be reduced.

The client may, for example, be a smartphone and the server may comprise e.g. a cloud service for executing a complex neural network for the analysis.

As discussed above, in some embodiments, the output of the teacher NN (i.e., analysis results) are always or conditionally (e.g., when requested by the client) sent back to the client.

Selection of weights for distortion components

According to an embodiment, the weights for human-perception distortion and NN distortion are pre-defined constants.

According to an embodiment, the weights for human-perception distortion and NN distortion are configurable but constant for the entire video or image. For example, the client device may provide a configuration option for this purpose. In another example, the weights to be used in encoding are indicated by the server to the client prior to the encoding.

According to an embodiment, the weights are dynamic temporally and/or spatially. The dynamically adjusted weights may be used but are not limited to the following embodiments:

- In an embodiment suitable for use cases where humans are not expected to view the content continuously or entirely, the weight for human-perception distortion may be selected to be relatively low when the student NN indicates no alerts, objects or events of interest, or alike, and may be selected to be relatively high otherwise. As a consequence, the perceptually optimized video/image quality is high for those temporal and/or spatial parts that are expected to be watched by human observers.

- In another embodiment for use cases where humans are not expected to view the content continuously or entirely, the weight for human-perception distortion may be selected to be relatively low when the teacher NN indicates no alerts, objects or events of interest, or alike, and may be selected to be relatively high otherwise. In this case, the weights are communicated from the server to the client.

- In an embodiment, a human observer actively controls the weights. In an example, the weights are derived from the attention of the human observer. For example, the human observer may turn on a certain video feed out of many options in a remote multi-camera monitoring system, or the head and/or gaze orientation of the human observer may be followed. When the attention of the human observer is detected, the weight for the human-perception distortion may be selected to be relatively high. The weights are communicated from the server to the client.

According to one embodiment, the weight used for human-perception distortion is zero.

Derivation of NN distortion

The NN distortion may be derived in several ways and also by using a combination of different techniques. In general, the embodiments are not limited to any particular way of deriving the NN distortion. Example embodiments for NN distortion derivation are described below.

Entropy of the output distribution of the student NN

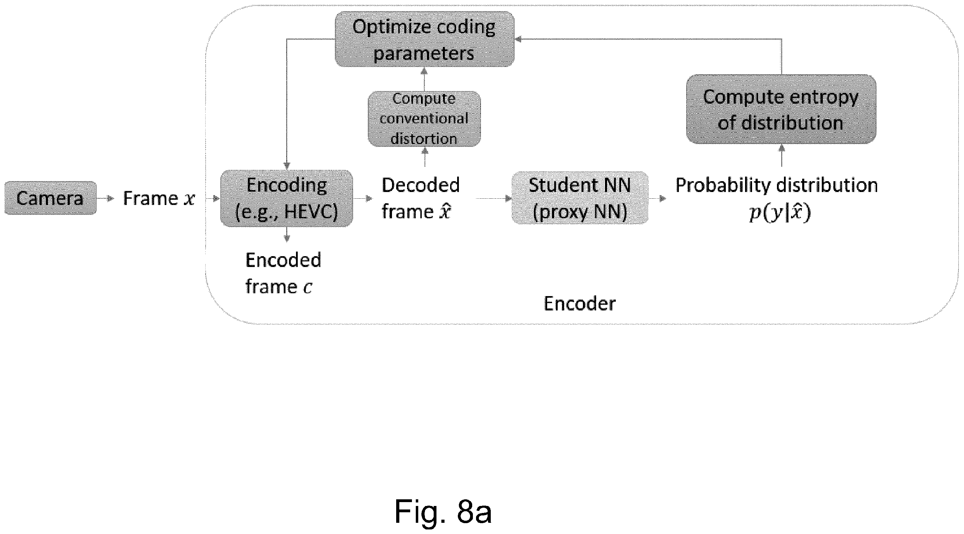

According to an embodiment, which is illustrated in Figure 8a, the NN distortion is derived from the entropy or an approximation of entropy of the output probability distribution of the student NN. An output distribution with high entropy is a distribution that is similar to a uniform distribution (which may indicate "confusion" or poor confidence of the NN). An output distribution with low entropy is a distribution that is similar to a peaked distribution, and it may indicate higher confidence in the output results of the neural network.

It is to be noticed that this embodiment may be used for a restricted class of neural network architectures, such as those for image classification, object detection, semantic segmentation, etc., where the final layer may comprise a softmax layer. For each input image, a softmax layer outputs a vector of numbers that sum up to 1. This may not be strictly a probability distribution, but in this example such an output vector is thought to be a valid approximation of a probability distribution.

Comparison of output of student NN inference of uncompressed and reconstructed signals

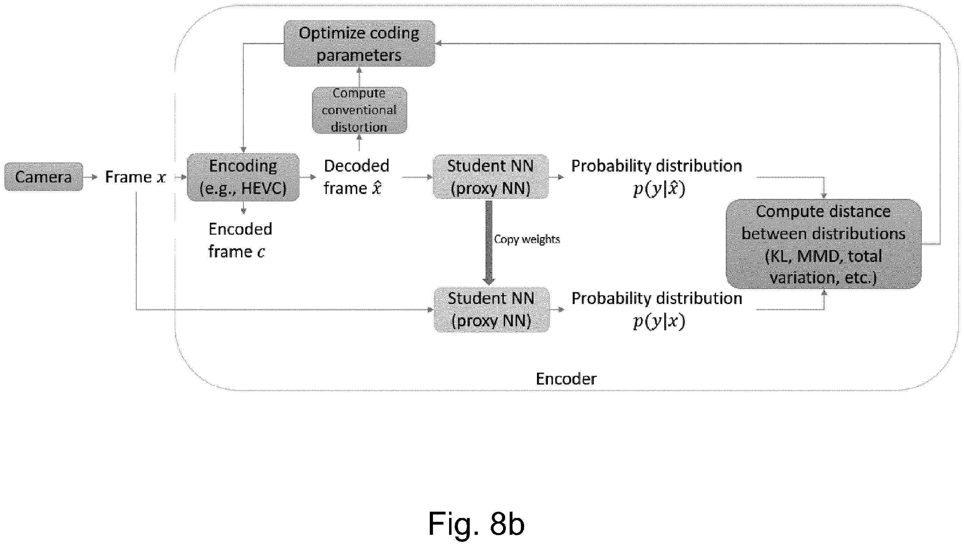

According to an embodiment, which is illustrated in Figure 8b, the student NN is executed on both the original uncompressed data and on the decoded data. The two output distributions are then compared in order to derive the NN distortion. The comparison may include a distance metric for probability distributions, such as but not necessarily limited to KL-divergence, Maximum Mean Discrepancy (MMD), and total variation. The NN distortion is directly proportional to the distance between the two probability distributions. In fact, if the two distributions are very different, it may mean that the input images (uncompressed and decoded) are very different too.

Pre-trained loss-prediction NN

According to an embodiment, it may be assumed that a separate neural network was trained to output the loss of the teacher NN. This can be done by first training a teacher NN for the task of interest (e.g., classification) on the training dataset ("teacher-training dataset"). Then, a loss-prediction NN is trained, where the input is a separate dataset ("loss-prediction-training dataset") with respect to the dataset used for training the teacher NN, and where the ground-truth output is the loss of the teacher NN. Such a ground-truth loss can be obtained by running the teacher NN in inference-mode on the loss-prediction-training dataset, computing the error (e.g., classification accuracy error) using the ground-truth labels, and storing the error values as the ground-truth loss for training the loss-prediction NN. The training of the loss-prediction NN can be done offline and by a device having access to the ground-truth loss values, such as by the server.

Once the loss-prediction NN has been trained offline and loaded onto the client, the decoded images can be input to such a network and the output predicted loss can be treated as the NN distortion. In this case, the student NN may be not necessary anymore.

Usage with scalable video coding

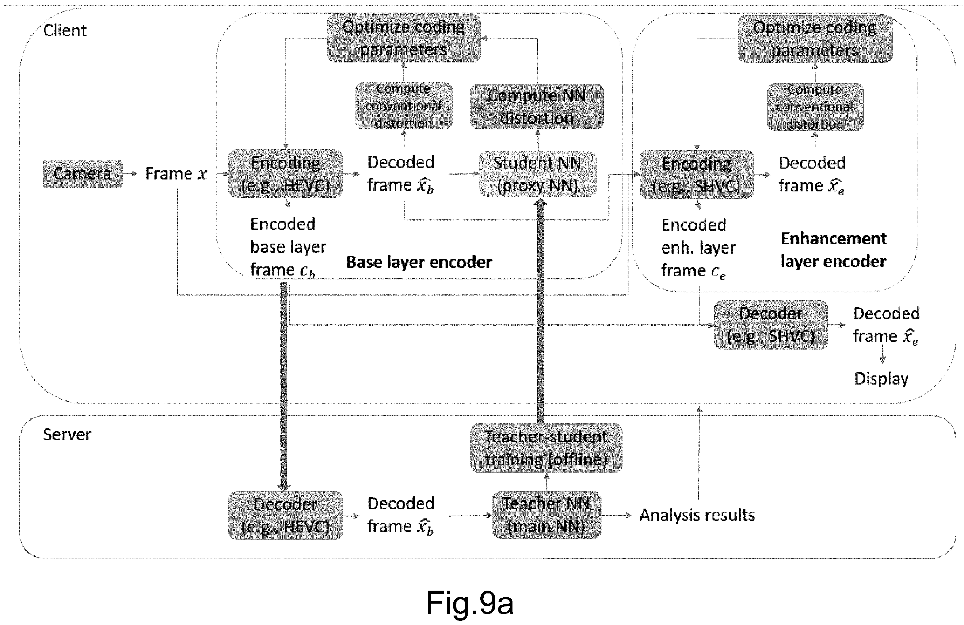

According to an embodiment, a scalable video encoding approach may be used. The embodiment may be applied in various usage scenarios. Below, the embodiment as illustrated in Figure 9a, is described in relation to the usage scenario for "bandwidth optimization in remote analysis", but it needs to be understood that the embodiment is not limited to this usage scenario only.

In the base layer encoder the conventional distortion and the NN distortion may be combined in a weighted manner for coding parameter selections, where the weight for conventional (human-perception) distortion is relatively smaller than that for the NN distortion. In some case, the weight for the human-perception distortion may be selected to be zero. Otherwise, the base layer encoder operates as described in other embodiments.

The encoder may indicate in or along the bitstream that the base layer is not intended for displaying. For example, pic_output_flag of HEVC may be set to 0 for base layer pictures. Additionally or alternatively, the encoder may provide in or along the bitstream an indication that the base layer is intended to be processed by a neural network. Other signaling related to the neural network may be also provided, for example the encoder may indicate a type of an analysis task to be performed by a neural network based on the base layer. An example of an indication provided in the bitstream is an SEI message having a particular type or indicator value indicating that pictures at its scope are intended to be processed by a neural network. The SEI message may also provide other signaling related to the neural network. The SEI message may be indicated to apply to the base layer only. An example of an indication provided along the bitstream is metadata of a container file that contains the bitstream. The metadata may be e.g. formatted according to the ISOBMFF and may for example encapsulated as a box in a sample entry of the track carrying the bitstream

Only the base-layer encoded pictures are transmitted to the server for performing the analysis. The analysis results may be transmitted to the client.

The enhancement layer encoder may be e.g. an SHVC (scalable HEVC) encoder. It may use the reconstructed base-layer signal and/or encoded base-layer pictures (e.g. coding parameter selections) in the encoding process. For example, the reconstructed base-layer picture may be used as a source picture for deriving a reference picture for inter-layer prediction. The enhancement layer encoder additionally uses the uncompressed picture as input. The enhancement layer encoder is assumed to be optimized only for human perception and thus it uses only human-perception distortion in coding parameter selections. Thus, additional layers are sent in the bitstream in order to switch from a quality which is good for NNs to a quality which is good for humans

The client device may also include functionality for playing back the video or image. Both the coded base-layer picture(s) and coded enhancement-layer pictures are decoded, whereas only the decoded enhancement-layer pictures need to be displayed.

According to an embodiment, additional layers are sent in the bitstream to either enable higher quality of NN results for the same task or enable other tasks.

Obtaining higher quality of the NN results may be relevant, for example, in a case where semantic segmentation could provide better results due to additional details being present in the decoded image. Thus, the server may request (with additional signaling) that additional layers may be needed, for example because the user wants a more fine-grained segmentation.

As described above, neural networks may be trained for various tasks for analyzing the content of image data. According to an embodiment, these tasks may be implemented enhancement layer-specifically. The computational complexity of the tasks may increase when moving to a higher enhancement layer.

As an example of enhancement layer-specific tasks for analyzing the content of image data, the following tasks could be associated with different enhancement layers:

1) A first quality enhancement layer may be sufficient for certain, rather simple tasks, such as object proposal.

2) A second quality enhancement layer may be sufficient for object recognition.

3) A third quality enhancement layer may be sufficient for semantic segmentation.

4) A fourth quality enhancement layer may be sufficient for image labeling, i.e. generating a natural language description of the content of the image.

5) A fifth quality enhancement layer may be sufficient for generating inter-object relations.

6) A sixth quality enhancement layer may be sufficient for predicting the future based on the content of the current image(s).

As an option, an enhancement layer may be extracted from a different capture time, e.g., from a different frame in the case of video.

Each encoded enhancement layer may be associated to signaling information about which task(s) it enables.

It needs to be understood that when additional enhancement layers are in use, embodiments are not limited to any particular layer dependency order or hierarchy (a.k.a. inter-layer prediction hierarchy). The encoder may indicate the layer dependency hierarchy in the bitstream, e.g. in a VPS.

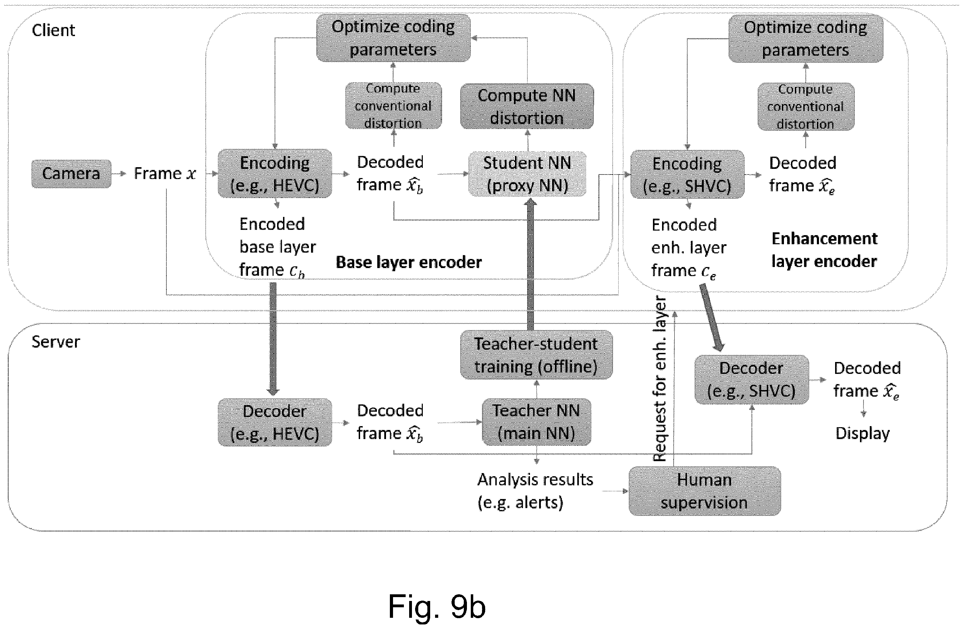

Figure 9b illustrates another embodiment related to the client-server usage scenario (e.g., remote surveillance monitoring), but it needs to be understood that the embodiment is not limited to this usage scenario only.

The encoding in the client may operate similarly to that in the previous embodiment.

By default the encoded base-layer pictures may be transmitted to the server. Consequently, the embodiment reduces the required bandwidth for transmitting video/image content from the client to the server and consequently also the power/computations of the client required for data transmission.

When the teacher NN detects an alert or alike, the human observer may request coded enhancement-layer pictures from the client. Alternatively, when the teacher NN detects an alert or alike, the server may automatically request coded enhancement-layer pictures from the client. Consequently, the coded enhancement-layer video is only transmitted when the user desires or is expected to desire to watch the video. The human observer can then monitor the video content to which the alert refers.

Indications / metadata

According to an embodiment, the student NN, which is trained by the server, is transmitted to the client. The student NN may be compressed by the server prior to its transmission to the client. The compression process may be such that the difference between the NN distortion measure values derived from the student NN and from the teacher NN is as small as possible.

The client may indicate in and/or along the bitstream and/or signal to the server information about the type of the task (Task-ID) for which the image/video compression (and/or the student NN used therein) was optimized. For example, if the client and/or the server have many student NNs available, this information assists the server to select the corresponding teacher NN. The task ID or alike may be indicative of the type of the analysis that the student NN is suitable for and/or that the teacher NN should carry out (e.g. but not limited to object detection, scene classification, semantic segmentation, video event detection, anomaly detection, and pedestrian tracking).

The Task ID may be any identifier, such as a Uniform Resource Identifier (URI), a UUID, or a registered identifier value (e.g. maintained by a registration authority). The Task ID may identify a neural network topology for the student NN and/or for the teacher NN. The Task ID may be used to determine some or all of the hyper-parameters and/or weights for the neural network. The Task ID or alike may be further characterized by additional metadata, such as version and/or certain indicated or pre-defined hyper-parameters and/or weights of the neural network.

According to an embodiment, the client may first request the server about what are the neural networks available at server side. Then, the client may encode the data with an encoder which was optimized for one of those networks (if available).

According to an embodiment, the server initially signals to the client the TaskID, which defines which teacher NN the server is interested to run on the data received from the client. The client then maps the TaskID to the correct algorithm for obtaining the NN distortion and encodes the data accordingly. For example, the TaskID may be mapped to a certain student NN or to a certain neural network which outputs the loss of the teacher NN.

An example of the signaling from the client to the server can be as follows:

At time t=(0,T_0): The client captures the content, encodes it, and sends the following types of information to the server through the channel.

a. The student NN model type (ResNet50, DenseNet, VGG16, etc.)

b. The task or tasks the student NN was trained on (object detection, semantic segmentation, etc.)

c. An indication whether the results of the task(s) needed to be sent back to the client, and if yes, what task results should be sent back

Tasks results that may be sent back to the client may include but are not limited to:

- For object detection: bounding box coordinates and associated object class index or string, for each detected object.
- For classification: index or string of main object/scene in image.
- For semantic segmentation: dense pixel-wise labels (1 label per pixel).

The pieces of information a, b, c may be coded with a binary vector. For example, for Information a, a code of a length may be used where 2^(bit_length) is the number of the network types. For example, if there are 4 network types, 01 may mean ResNet50. Similar signalling may be applied for any of the information types a - c.

According to an embodiment, the client indicates in and/or along the bitstream and/or signals to the server that the base layer is intended for machine analysis and may not be suitable for displaying or human observation.

According to an embodiment, the student NN and the NN distortion computation blocks in various embodiments is replaced by an NN distortion estimation block. The NN distortion estimation block may use features that may be obtained during the encoding process. For example, for the object detection task with a stationary camera, the features may comprise a sample-wise difference between pictures and an absolute range value (i.e., the maximum sample value - minimum sample value) within a selected window size of pixels.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

**Claims**

1. A method comprising

Encoding (500), in an encoder, several versions from an input image block, the encoding of the several versions being adjusted by different values of at least one coding parameter;

Reconstructing (502), per each of the several versions, a reconstructed image block from the encoded image block;

deriving (504) a first distortion between the reconstructed image block and the input image block;

inputting (506) the reconstructed image block into a first neural network arranged to perform at least one of the following: object detection, scene classification, semantic segmentation, video event detection, anomaly detection, pedestrian tracking; **characterized by**

obtaining a probability distribution over classes from an output of the first neural network;

obtaining (508) a second distortion on the basis of said probability distribution of the first neural network;

selecting (510) values of the at least one coding parameter among the several versions for minimizing a function $J = w1 \times D1 + w2 \times D2 + \lambda \times R$, where w1, w2 and $\lambda$ are weights, D1 is the first distortion, D2 is the second distortion and R is a number of bits used for encoding the input image block; and

encoding (512) the selected values into a bitstream.

2. The method according to claim 1, further comprising

deriving the second distortion from an entropy or an approximation of entropy of the output probability distribution of the first neural network.

3. The method according to claim 1, further comprising

executing the first neural network on uncompressed image block and the reconstructed image block for obtaining corresponding output probability distributions of the first neural network; and

deriving the second distortion from a difference between said output probability distributions.

4. The method according to any preceding claim, further comprising

inputting the at least one encoded image block into a decoder;

training a second neural network on the basis of at least one decoded image block obtained from the decoder for analyzing content of decoded image content; and

training the first neural network to approximate the analysis output of the second neural network.

5. The method according to claim 4, wherein the first neural network is implemented in a client apparatus comprising the encoder and the second neural network is implemented either in the client apparatus or in another apparatus.

6. An apparatus comprising

means for encoding, in an encoder, several versions from an input image block, the encoding of the several versions being adjusted by different values of at least one coding parameter;

means for reconstructing, for each of the several versions, a reconstructed image block from the encoded image block;

means for deriving a first distortion between the reconstructed image block and the input image block;

means for inputting the reconstructed image block into a first neural network arranged to perform at least one of the following: object detection, scene classification, semantic segmentation, video event detection, anomaly detection, pedestrian tracking; **characterized in that**

means for obtaining a probability distribution over classes from an output of the first neural network;

means for obtaining a second distortion on the basis of said probability distribution of the first neural network;

means for selecting values of the at least one coding parameter among the several versions for minimizing a function $J = w1 \times D1 + w2 \times D2 + \lambda \times R$, where w1, w2 and $\lambda$ are weights, D1 is the first distortion, D2 is the second distortion and R is a number of bits used for encoding the input image block; and

means for encoding the selected values into a bitstream.

7. The apparatus according to claim 6, further comprising

means for inputting the at least one encoded image block into a decoder;

means for training a second neural network on the basis of at least one decoded image block obtained from the decoder for analyzing content of decoded image content; and

means for training the first neural network to approximate the analysis output of the second neural network.

8. The apparatus according to claim 7, wherein the second neural network is implemented in another apparatus.

9. The apparatus according to any of claims 6 - 8, further comprising
means for deriving the second distortion from an entropy or an approximation of entropy of the output probability distribution of the first neural network.

10. The apparatus according to any of claims 6 - 8, further comprising

means for executing the first neural network on uncompressed image block and the reconstructed image block for obtaining corresponding output probability distributions of the first neural network; and
means for deriving the second distortion from a difference between said output probability distributions.

11. The apparatus according to any of claims 6 - 10, wherein the encoder comprises a base layer encoder and at least one enhancement layer encoder, the apparatus further comprising

means for optimizing coding parameters of said base layer encoder as a function of said first and second distortions; and
means for optimizing coding parameters of said enhancement layer encoder as a function of said first distortion only.

12. The apparatus according to any of claims 6 - 11, wherein weights for the first distortion and the second distortion are pre-defined constants.

13. The apparatus according to any of claims 6 - 11, wherein weights for the first distortion and the second distortion are configurable but constant for the entire video or image.

14. The apparatus according to any of claims 6 - 11, wherein weights for the first distortion and the second distortion are dynamic temporally and/or spatially.

15. The apparatus of according to any of claims 6 - 14, wherein the means comprises at least one processor and at least one memory, said at least one memory stored with code thereon, which when executed by said at least one processor, causes the performance of the apparatus.


**Patentansprüche**

1. Verfahren, das Folgendes umfasst

Codieren (500) von mehreren Versionen aus einem Eingangsbildblock in einem Codierer, wobei das Codieren der mehreren Versionen durch verschiedene Werte von mindestens einem Codierparameter angepasst wird;
Rekonstruieren (502) eines rekonstruierten Bildblocks pro jeder der mehreren Versionen aus dem codierten Bildblock;
Ableiten (504) einer ersten Verzerrung zwischen dem rekonstruierten Bildblock und dem Eingangsbildblock;
Eingeben (506) des rekonstruierten Bildblocks in ein erstes neuronales Netzwerk, das angeordnet ist, mindestens eines von Folgendem durchzuführen: Objektdetektion, Szenenklassifizierung, semantische Segmentierung, Videoereignisdetektion, Anomaliedetektion, Fußgängerverfolgung; **gekennzeichnet durch**
Erhalten einer Wahrscheinlichkeitsverteilung über Klassen von einer Ausgabe des ersten neuronalen Netzwerks;
Erhalten (508) einer zweiten Verzerrung auf Basis der Wahrscheinlichkeitsverteilung des ersten neuronalen Netzwerks;
Auswählen (510) von Werten des mindestens einen Codierparameters unter den mehreren Versionen zum Minimieren einer Funktion $J = w1 \times D1 + w2 \times D2 + \lambda \times R$, wo w1, w2 und $\lambda$ Gewichtungen sind, D1 die erste Verzerrung ist, D2 die zweite Verzerrung ist und R eine Anzahl von Bits ist, die zum Codieren des Eingangsbildblocks verwendet wird; und
Codieren (512) der ausgewählten Werte in einen Bitstrom.

2. Verfahren nach Anspruch 1, das ferner Folgendes umfasst Ableiten der zweiten Verzerrung aus einer Entropie oder einer Entropieannäherung der Ausgabewahrscheinlichkeitsverteilung des ersten neuronalen Netzwerks.

**3.** Verfahren nach Anspruch 1, das ferner Folgendes umfasst

Ausführen des ersten neuronalen Netzwerks an einem nicht komprimierten Bildblock und dem rekonstruierten Bildblock zum Erhalten von entsprechenden Ausgabewahrscheinlichkeitsverteilungen des ersten neuronalen Netzwerks; und
Ableiten der zweiten Verzerrung aus einer Differenz zwischen den Ausgabewahrscheinlichkeitsverteilungen.

**4.** Verfahren nach einem der vorhergehenden Ansprüche, das ferner Folgendes umfasst

Eingeben des mindestens einen codierten Bildblocks in einen Decodierer;
Trainieren eines zweiten neuronalen Netzwerks auf Basis von mindestens einem decodierten Bildblock, der vom Decodierer erhalten wird, zum Analysieren eines Inhalts des decodierten Bildinhalts; und
Trainieren des ersten neuronalen Netzwerks, um sich der Analyseausgabe des zweiten neuronalen Netzwerks anzunähern.

**5.** Verfahren nach Anspruch 4, wobei das erste neuronale Netzwerk in einer Clientvorrichtung, die den Codierer umfasst, implementiert ist und das zweite neuronale Netzwerk entweder in der Clientvorrichtung oder in einer anderen Vorrichtung implementiert ist.

**6.** Vorrichtung, die Folgendes umfasst

Mittel zum Codieren von mehreren Versionen aus einem Eingangsbildblock in einem Codierer, wobei das Codieren der mehreren Versionen durch verschiedene Werte von mindestens einem Codierparameter angepasst wird;
Mittel zum Rekonstruieren eines rekonstruierten Bildblocks pro jeder der mehreren Versionen aus dem codierten Bildblock;
Mittel zum Ableiten einer ersten Verzerrung zwischen dem rekonstruierten Bildblock und dem Eingangsbildblock;
Mittel zum Eingeben des rekonstruierten Bildblocks in ein erstes neuronales Netzwerk, das angeordnet ist, mindestens eines von Folgendem durchzuführen: Objektdetektion, Szenenklassifizierung, semantische Segmentierung, Videoereignisdetektion, Anomaliedetektion, Fußgängerverfolgung; **dadurch gekennzeichnet, dass**
Mittel zum Erhalten einer Wahrscheinlichkeitsverteilung über Klassen von einer Ausgabe des ersten neuronalen Netzwerks;
Mittel zum Erhalten einer zweiten Verzerrung auf Basis der Wahrscheinlichkeitsverteilung des ersten neuronalen Netzwerks;
Mittel zum Auswählen von Werten des mindestens einen Codierparameters unter den mehreren Versionen zum Minimieren einer Funktion $J = w1 \times D1 + w2 \times D2 + \lambda \times R$, wo w1, w2 und $\lambda$ Gewichtungen sind, D1 die erste Verzerrung ist, D2 die zweite Verzerrung ist und R eine Anzahl von Bits ist, die zum Codieren des Eingangsbildblocks verwendet wird; und
Mittel zum Codieren der ausgewählten Werte in einen Bitstrom.

**7.** Vorrichtung nach Anspruch 6, die ferner Folgendes umfasst

Mittel zum Eingeben des mindestens einen codierten Bildblocks in einen Decodierer;
Mittel zum Trainieren eines zweiten neuronalen Netzwerks auf Basis von mindestens einem decodierten Bildblock, der vom Decodierer erhalten wird, zum Analysieren eines Inhalts des decodierten Bildinhalts; und
Mittel zum Trainieren des ersten neuronalen Netzwerks, um sich der Analyseausgabe des zweiten neuronalen Netzwerks anzunähern.

**8.** Vorrichtung nach Anspruch 7, wobei das zweite neuronale Netzwerk in einer anderen Vorrichtung implementiert ist.

**9.** Vorrichtung nach einem der Ansprüche 6-8, die ferner Folgendes umfasst
Mittel zum Ableiten der zweiten Verzerrung aus einer Entropie oder einer Entropieannäherung der Ausgabewahrscheinlichkeitsverteilung des ersten neuronalen Netzwerks.

**10.** Vorrichtung nach einem der Ansprüche 6-8, die ferner Folgendes umfasst

Mittel zum Ausführen des ersten neuronalen Netzwerks an einem nicht komprimierten Bildblock und dem rekonstruierten Bildblock zum Erhalten von entsprechenden Ausgabewahrscheinlichkeitsverteilungen des ersten neuronalen Netzwerks; und
Mittel zum Ableiten der zweiten Verzerrung aus einer Differenz zwischen den Ausgabewahrscheinlichkeitsverteilungen.

11. Vorrichtung nach einem der Ansprüche 6-10, wobei der Codierer einen Basisschichtcodierer und mindestens einen Erweiterungsschichtcodierer umfasst, wobei die Vorrichtung ferner Folgendes umfasst

Mittel zum Optimieren von Codierparametern des Basisschichtcodierers in Abhängigkeit von der ersten und der zweiten Verzerrung; und
Mittel zum Optimieren von Codierparametern des Erweiterungsschichtcodierers in Abhängigkeit nur von der ersten Verzerrung.

12. Vorrichtung nach einem der Ansprüche 6-11, wobei Gewichtungen für die erste Verzerrung und die zweite Verzerrung vordefinierte Konstanten sind.

13. Vorrichtung nach einem der Ansprüche 6-11, wobei Gewichtungen für die erste Verzerrung und die zweite Verzerrung für das gesamte Video oder Bild auslegbar, aber konstant sind.

14. Vorrichtung nach einem der Ansprüche 6-11, wobei Gewichtungen für die erste Verzerrung und die zweite Verzerrung zeitlich und/oder räumlich dynamisch sind.

15. Vorrichtung nach einem der Ansprüche 6-14, wobei die Mittel mindestens einen Prozessor und mindestens einen Speicher umfassen, wobei in dem mindestens einen Speicher Code gespeichert ist, der, wenn er von dem mindestens einen Prozessor ausgeführt wird, die Durchführung der Vorrichtung bewirkt.


**Revendications**

1. Procédé comprenant :

le codage (500), dans un codeur, de multiples versions à partir d'un bloc d'image d'entrée, le codage des multiples versions étant réglé par différentes valeurs d'au moins un paramètre de codage ;
la reconstruction (502), par chacune des multiples versions, d'un bloc d'image reconstruit à partir du bloc d'image codé ;
la dérivation (504) d'une première distorsion entre le bloc d'image reconstruit et le bloc d'image d'entrée ;
l'entrée (506) du bloc d'image reconstruit dans un premier réseau neuronal agencé pour réaliser au moins une des opérations suivantes : une détection d'objet, une classification de scène, une segmentation sémantique, une détection d'événement vidéo, une détection d'anomalie, un suivi de piéton ;
**caractérisé par**
l'obtention d'une distribution de probabilité sur les classes à partir d'une sortie du premier réseau neuronal ;
l'obtention (508) d'une deuxième distorsion sur la base de ladite distribution de probabilité du premier réseau neuronal ;
la sélection (510) de valeurs de l'au moins un paramètre de codage parmi les multiples versions pour minimiser une fonction $J = w1 \times D1 + w2 \times D2 + \lambda \times R$, où $w1$, $w2$ et $\lambda$ sont des poids, D1 est la première distorsion, D2 est la deuxième distorsion et R est un nombre de bits utilisés pour coder le bloc d'image d'entrée ; et
le codage (512) des valeurs sélectionnées dans un train de bits.

2. Procédé selon la revendication 1, comprenant en outre
la dérivation de la deuxième distorsion à partir d'une entropie ou d'une approximation de l'entropie de la distribution de probabilité de sortie du premier réseau neuronal.

3. Procédé selon la revendication 1, comprenant en outre l'exécution du premier réseau neuronal sur un bloc d'image non compressé et le bloc d'image reconstruit pour obtenir des distributions de probabilité de sortie correspondantes du premier réseau neuronal ; et
la dérivation de la deuxième distorsion à partir d'une différence entre lesdites distributions de probabilité de sortie.

4. Procédé selon l'une quelconque des revendications précédentes, comprenant en outre

l'entrée de l'au moins un bloc d'image codé dans un décodeur ;
la formation d'un deuxième réseau neuronal sur la base d'au moins un bloc d'image décodé obtenu du décodeur pour analyser un contenu d'un contenu d'image décodé ; et
la formation du premier réseau neuronal pour se rapprocher de la sortie d'analyse du deuxième réseau neuronal.

5. Procédé selon la revendication 4, dans lequel le premier réseau neuronal est mis en œuvre dans un appareil client comprenant le codeur, et le deuxième réseau neuronal est mis en œuvre soit dans l'appareil client, soit dans un autre appareil.

6. Appareil comprenant

des moyens pour coder, dans un codeur, de multiples versions à partir d'un bloc d'image d'entrée, le codage des multiples versions étant réglé par différentes valeurs d'au moins un paramètre de codage ;
des moyens pour reconstruire, pour chacune des multiples versions, un bloc d'image reconstruit à partir du bloc d'image codé ;
des moyens pour dériver une première distorsion entre le bloc d'image reconstruit et le bloc d'image d'entrée ;
des moyens pour entrer le bloc d'image reconstruit dans un premier réseau neuronal agencé pour réaliser au moins une des opérations suivantes : une détection d'objet, une classification de scène, une segmentation sémantique, une détection d'événement vidéo, une détection d'anomalie, un suivi de piéton ;
**caractérisé en ce que**
des moyens pour obtenir une distribution de probabilité sur les classes à partir d'une sortie du premier réseau neuronal ;
des moyens pour obtenir une deuxième distorsion sur la base de ladite distribution de probabilité du premier réseau neuronal ;
des moyens pour sélectionner des valeurs de l'au moins un paramètre de codage parmi les multiples versions pour minimiser une fonction $J = w1 \times D1 + w2 \times D2 + \lambda \times R$, où $w1$, $w2$ et $\lambda$ sont des poids, $D1$ est la première distorsion, $D2$ est la deuxième distorsion et $R$ est un nombre de bits utilisés pour coder le bloc d'image d'entrée ; et
des moyens pour coder les valeurs sélectionnées dans un train de bits.

7. Appareil selon la revendication 6, comprenant en outre des moyens pour entrer l'au moins un bloc d'image codé dans un décodeur ;

des moyens pour former un deuxième réseau neuronal sur la base d'au moins un bloc d'image décodé obtenu du décodeur pour analyser un contenu d'un contenu d'image décodé ; et
des moyens pour former le premier réseau neuronal pour se rapprocher de la sortie d'analyse du deuxième réseau neuronal.

8. Appareil selon la revendication 7, dans lequel le deuxième réseau neuronal est mis en œuvre dans un autre appareil.

9. Appareil selon l'une quelconque des revendications 6 à 8, comprenant en outre
des moyens pour dériver la deuxième distorsion à partir d'une entropie ou d'une approximation de l'entropie de la distribution de probabilité de sortie du premier réseau neuronal.

10. Appareil selon l'une quelconque des revendications 6 à 8, comprenant en outre

des moyens pour exécuter le premier réseau neuronal sur un bloc d'image non compressé et le bloc d'image reconstruit pour obtenir des distributions de probabilité de sortie correspondantes du premier réseau neuronal ; et
des moyens pour dériver la deuxième distorsion à partir d'une différence entre lesdites distributions de probabilité de sortie.

11. Appareil selon l'une quelconque des revendications 6 à 10, dans lequel le codeur comprend un codeur de couche de base et au moins un codeur de couche à enrichissement, l'appareil comprenant en outre

des moyens pour optimiser des paramètres de codage dudit codeur de couche de base en fonction desdites première et deuxième distorsions ; et
des moyens pour optimiser les paramètres de codage dudit codeur de couche à enrichissement en fonction uniquement de ladite première distorsion.

**12.** Appareil selon l'une quelconque des revendications 6 à 11, dans lequel des poids pour la première distorsion et la deuxième distorsion sont des constantes prédéfinies.

**13.** Appareil selon l'une quelconque des revendications 6 à 11, dans lequel des poids pour la première distorsion et la deuxième distorsion sont configurables mais constants pour l'ensemble de la vidéo ou de l'image.

**14.** Appareil selon l'une quelconque des revendications 6 à 11, dans lequel des poids pour la première distorsion et la deuxième distorsion sont dynamiques temporellement et/ou spatialement.

**15.** Appareil selon l'une quelconque des revendications 6 à 14, dans lequel les moyens comprennent au moins un processeur et au moins une mémoire, ladite au moins une mémoire stockant un code qui, lorsqu'il est exécuté par ledit au moins un processeur, provoque la performance de l'appareil.

**Fig. 1**

**Fig. 2**

Fig. 3

Fig. 4

Encode, in an encoder, several versions from an input image block, the encoding of the several versions being adjusted by different values of at least one coding parameter (500)

↓

Reconstruct, per each of the several versions, a reconstructed image block from the encoded image block (502)

↓

Derive a first distortion between the reconstructed image block and the input image block (504)

↓

Input the reconstructed image block into a first neural network trained to analyze content of decoded image content (506)

↓

Obtain a second distortion on the basis of loss of the first neural network (508)

↓

Select values of the at least one coding parameter among the several versions using a function of said first and second distortions (510)

↓

Encode the selected values into a bitstream (512)

# Fig. 5

Fig. 6

EP 3 633 990 B1

Fig. 7a

EP 3 633 990 B1

Fig. 7b

Fig. 7c

Fig. 8a

Fig. 8b

Fig.9a

EP 3 633 990 B1

Fig. 9b

**EP 3 633 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108184129

**Non-patent literature cited in the description**

- **J. YAO et al.** AHG9: Convolutional Neural Network Filter for inter frames. *JVET-J0043-v2,* 09 April 2018